**Europäisches Patentamt**

**European Patent Office**

**Office européen des brevets**

(11) Veröffentlichungsnummer : **0 359 741 B1**

(19)

(12) **EUROPÄISCHE PATENTSCHRIFT**

(45) Veröffentlichungstag der Patentschrift :
**19.08.92 Patentblatt 92/34**

(51) Int. Cl.⁵ : **A01B 49/06**

(21) Anmeldenummer : **88902441.0**

(22) Anmeldetag : **03.03.88**

(86) Internationale Anmeldenummer :
**PCT/EP88/00158**

(87) Internationale Veröffentlichungsnummer :
**WO 88/06399 07.09.88 Gazette 88/20**

(54) **GERÄTESYSTEM FÜR DIE LANDWIRTSCHAFTLICHE BODENBEARBEITUNG.**

(30) Priorität : **06.03.87 DE 8703393 U**
**03.09.87 DE 8711912 U**
**19.11.87 DE 8715345 U**

(43) Veröffentlichungstag der Anmeldung :
**28.03.90 Patentblatt 90/13**

(45) Bekanntmachung des Hinweises auf die
Patenterteilung :
**19.08.92 Patentblatt 92/34**

(84) Benannte Vertragsstaaten :
**AT CH DE FR GB IT LI NL**

(56) Entgegenhaltungen :
**EP-A- 211 967**
**EP-A- 0 033 950**
**EP-A- 0 161 621**
**EP-A- 0 201 785**
**DE-A- 3 130 910**
**DE-A- 3 512 658**
**FR-A- 1 426 015**
**FR-A- 1 430 128**

(73) Patentinhaber : **Maschinenfabrik Rau GmbH**
**Johannes-Rau-Strasse**
**W-7315 Weilheim (DE)**

(72) Erfinder : **RAU, Willy**
**Beethovenstrasse 7**
**W-7312 Kirchheim (DE)**
Erfinder : **RAU, Wolfgang**
**Karlstrasse 24**
**W-7311 Holzmaden (DE)**
Erfinder : **TAUS, Christian**
**Galgenberg 19**
**W-7312 Kirchheim (DE)**

(74) Vertreter : **Manitz, Gerhart, Dr. Dipl.-Phys. et al**
**MANITZ, FINSTERWALD & ROTERMUND**
**Seelbergstrasse 23/25**
**W-7000 Stuttgart 50 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Gerätesystem für die landwirtschaftliche Bodenbearbeitung mit an ein Zugfahrzeug, z.B. einen Traktor, mittels Hub- bzw. Dreipunktgestänges vertikal beweglich ankoppelbarem Rahmenaggregat für verschiedenartig kombinierbares Bodenbearbeitungsgerät, wie zapfwellengetriebenes Zinkenrotorgerät od.dgl. Geräte, welche einen ähnlichen Erdstrom erzeugen, der hinter dem Zinkenrotor durch dort angeordnete Mittel zum Boden geleitet wird, und Sämaschine, welche hinter dem Zinkenrotorgerät od.dgl. anbringbare und in den vom Zinkenrotorgerät od.dgl. aufgeworfenen Erdstrom hineinragende, höhenverstellbare Saataustragsrohre besitzt, und Boden- bzw. Krümlerwalzengerät und Scharwerkzeuge od.dgl., die am Rahmen des Zinkenrotorgerätes vor dem Rotor höhenverstellbar anbringbar sind, wobei am Rahmen des Zinkenrotorgerätes od.dgl. ein an das Hub- bzw. Dreipunktgestänge ankoppelbarer bockartiger Rahmenteil fest angeordnet ist und das Boden- bzw. Krümlerwalzengerät einen gesonderten Rahmen besitzt, welcher nach Art einer Schwinge um eine Querachse schwenkverstellbar an gesonderte Anschlußpunkte des Rahmens des Zinkenrotorgerätes od.dgl. anschließbar ist.

Für die landwirtschaftliche Bodenbearbeitung sind Kombinationsgeräte grundsätzlich bekannt, welche bei einer einzigen Überfahrt über den zu bearbeitenden bzw. zu bestellenden Boden mehrere Arbeitsgänge gleichzeitig ausführen.

Beispielsweise wird in der EP-A 02 01 785 ein landwirtschaftliches Kombinationsgerät der eingangs angegebenen Art beschrieben.

Die Sämaschine dieses bekannten Gerätes kann wahlweise mit Säscharen, die hinter der Krümlerwalze arbeiten, oder mit Saataustragsrohren ausgerüstet sein, welche innerhalb des vom Zinkenrotor aufgeworfenen Erdstromes vor der Krümlerwalze arbeiten. Um dabei zu verhindern, daß die Abstandsräume zwischen den Saataustragsrohren durch anhaftende Erde oder Pflanzenreste verstopft werden, sind die Saataustragsrohre unmittelbar vor der Krümlerwalze angeordnet, und zwar derart, daß auf der Krümlerwalze angeordnete Zahnreihen in die Abstandsräume zwischen den Saataustragsrohren hineinragen. Auf diese Weise werden die Abstandsräume durch die sich bei der Fahrt des Gerätes bewegenden Zähne der Krümlerwalze von Verstopfungen freigehalten. Allerdings sind dazu Krümlerwalzen mit entsprechend langen Zähnen notwendig, d.h. es können nicht ohne weiteres beliebige Krümlerwalzen verwendet werden.

Die Säschare sind in der EP-A 02 01 785 in zwei Reihen hintereinander angeordnet, wobei in Gerätequerrichtung aufeinanderfolgende Säschare abwechselnd der einen und der anderen Reihe zugeordnet sind. Eine derartige Anordnung ist notwendig, um mit Säscharen einen relativ geringen Strichabstand in Gerätequerrichtung erreichen zu können.

Da die Säschare in den Boden einschneiden, haben sie grundsätzlich den Nachteil, daß im Boden verbleibende Pflanzenreste an den Säscharen hängenbleiben können. Dementsprechend sind Säschare dann nachteilhaft, wenn auf oder im Boden noch größere Mengen von Pflanzenresten vorhanden sind.

Bei dem in der EP-A 02 01 785 dargestellten Kombinationsgerät hat die Krümlerwalze auch die Aufgabe, den vom Zinkenrotor nach hinten geworfenen Erdstrom zum Boden zu leiten.

In der EP-A 02 11 967 wird ein weiteres Kombinationsgerät dargestellt.

Hier ist ein Vorgerät, welches Scharwerkzeuge trägt und mit eigenen Rädern auf dem zu bearbeitenden Boden abgestützt ist, mittels Dreipunktgestänges an ein Zugfahrzeug ankoppelbar.

An das Vorgerät läßt sich ein zweites Gerät, welches als Kreiselegge ausgebildet ist, mittels eines Dreipunktgestänges höhenbeweglich anschließen. Das zweite Gerät ist mittels einer Nachlaufwalze bei der Arbeit auf dem Boden abgestützt.

Mittels eines weiteren Dreipunktgestänges kann hinter dem zweiten Gerät ein auf gesonderten Rädern rollender Karren angeschlossen werden, hinter dem dann, wiederum mittels eines Dreipunktgestänges, ein auf eigenen Rädern laufendes Nachfolgegerät, beispielsweise eine Sämaschine, höhenbeweglich angeschlossen werden kann.

Der Karren dient vor allem dazu, das Gerät beim Transport in angehobener Lage abzustützen. Dabei wird das vordere Ende der gesamten Gerätekombination vom Zugfahrzeug aus mittels des zugfahrzeugseitigen Dreipunktgestänges angehoben. Des weiteren werden die Dreipunktgestänge vor und hinter dem Karren hydraulisch verstellt, derart, daß das zweite Gerät sowie das Nachfolgegerät angehoben werden.

Aufgabe der Erfindung ist es nun, ein Gerätesystem zu schaffen, welches vergleichsweise preisgünstig hergestellt werden kann und dessen gegebenenfalls auch separat verwendbare Systemkomponenten mit besonders geringem Arbeitsaufwand miteinander kombiniert werden können.

Diese Aufgabe wird bei einem Gerätesystem der eingangs angegebenen Art erfindungsgemäß dadurch gelöst,

– daß auch am Rahmen eines separaten Fahrwerkes mit Stützrädern ein an das Hub- bzw. Dreipunktgestänge ankoppelbarer bockartiger Rahmenteil fest angeordnet ist,

– daß auf der vom Hub- bzw. Dreipunktgestänge abgewandten Heckseite der bockartigen Rahmenteile von Zinkenrotorgerät od.dgl. und Fahrwerk - als Teil des bockartigen Rahmenteiles oder damit fest verbunden - ein Stützrahmen angeordnet ist, welcher mit passenden Aufnahmeteilen eines Tragrahmens der Sämaschine koppelbar ist, indem der Stützrahmen von unten in die Aufnahmeteile eingeführt bzw. der Tragrahmen der Sämaschine von oben auf den Stützrahmen agesenkt und mittels einer spielfreien Verriegelung in allen Richtungen relativ zum Stützrahmen arretiert wird,

– daß am Tragrahmen der Sämaschine gleichartige gesonderte Anschlußpunkte wie am Rahmen des Zinkenrotorgerätes od.dgl. für den gesonderten Rahmen des Boden- bzw. Krümlerwalzengerätes angeordnet sind,

– daß die Saataustragsrohre in zumindest zwei Reihen hintereinander anbringbar sind, wobei in Querrichtung aufeinanderfolgende Saataustragsrohre abwechselnd der einen und der anderen Reihe zugeordnet sind,

– daß hinter den Saataustragsrohren - vor dem gegebenenfalls angeschlossenen Boden- bzw. Krümlerwalzengerätein mattenartiger Vorhang quer anbringbar ist, welcher den Erdstrom zum Boden leitet, und

– daß die Scharwerkzeuge od.dgl. auch am Fahrwerksrahmen anbringbar sind.

Mit dem erfindungsgemäßen Gerätesystem können in sehr einfacher Weise verschiedene Gerätekombinationen zusammengestellt werden. Beispielsweise besteht die Möglichkeit, ein einfaches Sägerät zusammenzustellen, indem die Sämaschine mit ihrem Tragrahmen auf den Fahrwerksrahmen angeordnet wird. Am Fahrwerksrahmen können gegebenenfalls scharartige Werkzeuge angeordnet sein, um die Bodenoberfläche aufzureißen bzw. zu lockern und damit für die Aufnahme des Saatgutes besser vorzubereiten.

Gegebenenfalls kann dieses Sägerät mit einer Boden- bzw. Krümlerwalze kombiniert werden, denn am Tragrahmen der Sämaschine sind entsprechende Anschlußpunkte für den Rahmen der Walze vorhanden.

Der Zinkenrotor kann jederzeit alleine oder in Kombination mit an seinem Rahmen angeordneten Scharwerkzeugen, welche vor dem Zinkenrotor arbeiten, eingesetzt werden.

Eine Kombination mit einer Boden- bzw. Krümlerwalze ist jederzeit möglich, weil geeignete Anschlußpunkte vorhanden sind.

Mit einer aus Zinkenrotor und Bodenwalze bestehenden Kombination, welche gegebenenfalls noch vor dem Zinkenrotor an dessen Rahmen angeordnete Scharwerkzeuge od.dgl. besitzen kann, läßt sich ein besonders gut vorbereitetes Saatbett herstellen. Die Saat kann dann mit einem bereits im landwirtschaftlichen Betrieb vorhandenen Sägerät eingebracht werden

Darüber hinaus kann der Zinkenrotor jederzeit mit der Sämaschine kombiniert werden, an die bei Bedarf dann eine Bodenwalze angeschlossen werden kann, so daß bei einer einzigen Überfahrt ein intensives Durcharbeiten des Bodens mit dem Zinkenrotor od.dgl. sowie den gegebenenfalls davor angeordneten Scharwerkzeugen, ein Einbringen des Saatgutes in den Boden sowie eine oberflächliche Verfestigung desselben mittels der Boden- bzw. Krümlerwalze zur besseren Einbettung des Saatgutes im Boden bzw. zur besseren Abdeckung des Saatgutes mit Erde ermöglicht werden.

Die Kombination der Systemkomponenten miteinander ist besonders einfach.

Beispielsweise brauchen der Fahrwerksrahmen bzw. der Zinkenrotor bei einer Kombination mit der Sämaschine lediglich mittels des Hub- bzw. Dreipunktgestänges des Zugfahrzeuges vertikal bewegt zu werden, um den Stützrahmen in die Aufnahmeteile des Tragrahmens der Sämaschine einzuführen. Zuvor muß das Zugfahrzeug mit dem angekoppelten Fahrwerksrahmen bzw. dem angekoppelten Zinkenrotor lediglich in eine für die Aufnahme der abgestellten Sämaschine geeignete Position rangiert werden.

In ähnlich einfacher Weise kann die Boden- bzw. Krümlerwalze an den Zinkenrotor bzw. den Tragrahmen der Sämaschine angeschlossen werden. Nachdem auch hier das Zugfahrzeug mit dem Fahrwerksrahmen und der aufgesattelten Sämaschine bzw. dem Zinkenrotor und der Sämaschine in eine geeignete Position rangiert wurde, braucht das bereits am Hub- bzw. Dreipunktgestänge gehalterte Gerät lediglich vertikal bewegt zu werden, bis der Rahmen des Zinkenrotors bzw. der Tragrahmen der Sämaschine eine zum Anschluß des Walzenrahmens geeignete Stellung bzw. Höhenlage einnehmen.Dabei wird das Ankoppeln des Walzenrahmens erleichtert, weil derselbe eine an den Rahmen des Zinkenrotors bzw. den Tragrahmen der Sämaschine anzuschließende Schwinge bildet, d.h. ein Anschluß des Walzenrahmens ist bei unterschiedlichen Neigungen der Schwinge möglich.

Aufgrund der oben angegebenen besonderen Anordnung der Saataustragsrohre bleiben zwischen denselben große Abstandsräume frei, durch die auch langsträhnige Pflanzenreste od.dgl. hindurchtreten können. Eine Verstopfung der Abstandsräume zwischen den Saataustragsrohren braucht daher weder bei Einsatz der Sämaschine ohne Zinkenrotor noch bei Einsatz der Sämaschine in Kombination mit dem Zinkenrotor befürchtet zu werden.

Der hinter den Saataustragsrohren anbringbare mattenartige Vorhang begünstigt insbesondere bei Kombination der Sämaschine mit dem Zinkenrotor die Abdeckung des Saatgutes, indem dieser Vorhang den vom Zinkenrotor nach hinten, zwischen den Saataustragsrohren hindurchgeworfenen Erdstrom zur Bodenoberfläche leitet.

Dadurch wird gleichzeitig die gegebenenfalls hinter den Saataustragsrohren arbeitende Boden- bzw. Krümlerwalze abgeschirmt, d.h. auch bei Arbeit auf feuchten Böden wird die Walze nur vergleichsweise wenig verschmutzt. Aufgrund der Flexibilität des Vorhanges bleibt auch feuchte oder lehmig-klebrige Erde nur kurzzeitig am Vorhang haften. Infolge der ständig wechselnden Bewegungen des Vorhanges wird anhaftende Erde in kürzester Zeit abgelöst und zur Bodenoberfläche geleitet, d.h. der Vorhang reinigt sich selbst.

Im übrigen wird hinsichtlich vorteilhafter und bevorzugter Merkmale der Erfindung auf die Unteransprüche und die nachfolgende Beschreibung bevorzugter Ausführungsformen anhand der Zeichnung verwiesen.

Dabei zeigt

Fig. 1 eine Seitenansicht des Fahrwerks mit den Stützrädern,

Fig. 2 eine Seitenansicht des Zinkenrotors,

Fig. 3 eine Seitenansicht der Sämaschine,

Fig. 4 eine Seitenansicht der Boden- bzw. Krümlerwalze,

Fig. 5 eine Ansicht des am Fahrwerk bzw. am Rahmen des Zinkenrotors angeordneten Stützrahmens entsprechend den Pfeilen Z in den Figuren 1 und 2,

Fig. 6 eine Seitenansicht einer Gerätekombination mit unter anderem einem Zinkenrotor, einer Sämaschine, einer Boden- bzw. Krümlerwalze sowie vor dem Zinkenrotor angeordneten Scharwerkzeugen,

Fig. 7 eine teilweise Seitenansicht des in Fig. 6 dargestellten Gerätes, wobei die Boden- bzw. Krümlerwalze einmal in Arbeitslage (Fig. 7A) und einmal in hochgeklappter Transportlage (Fig. 7B) dargestellt ist,

Fig. 8 eine Seitenansicht einer am Rahmen des Zinkenrotors anbringbaren Halterung für die Stiele der vor dem Zinkenrotor arbeitenden Scharwerkzeuge,

Fig. 9 eine Frontansicht dieser Halterung entsprechend dem Pfeil IX in Fig. 8,

Fig. 10 eine Seitenansicht des vor dem Zinkenrotor angeordneten, zur Lockerung des Bodens dienenden Scharwerkzeuges,

Fig. 11 ein Schnittbild dieses Werkzeuges entsprechend der Schnittlinie XI-XI in Fig. 10,

Fig. 12 eine Ansicht eines Rotorzinkens, in Achsrichtung des Zinkenrotors gesehen,

Fig. 13 eine Ansicht des Rotorzinkens entsprechend dem Pfeil XIII in Fig. 12,

Fig. 14 eine Seitenansicht eines als Mulchzinken ausgebildeten Zinkenendstückes des Zinkenrotors, in Achsrichtung desselben gesehen,

Fig. 15 ein Schnittbild des Mulchzinkens entsprechend der Schnittlinie XV-XV in Fig. 14,

Fig. 16 eine Achsansicht eines Zwischenlagers des Zinkenrotors,

Fig. 17 eine Ansicht des Zwischenlagers entsprechend dem Pfeil XVII in Fig. 16,

Fig. 18 einen Axialschnitt des Zwischenlagers,

Fig. 19 eine Heckansicht der Sämaschine,

Fig. 20 eine Seitenansicht der Saataustragsrohre sowie der zugehörigen Halte- und Verstellanordnung,

Fig. 21 eine Seitenansicht eines in Fahrtrichtung vorderen Saataustragsrohres, welches an einem Querbalken gegen Federkraft verschwenkbar gehaltert ist,

Fig. 22 eine der Fig. 21 entsprechende Darstellung eines in Fahrtrichtung hinteren Saataustragsrohres,

Fig. 23 eine Seitenansicht des Fahrwerks mit Stützrädern und auf dem Fahrwerkrahmen aufgesattelter Sämaschine und

Fig. 24 eine der Fig. 23 entsprechende Seitenansicht einer auf den Fahrwerksrahmen aufgesattelten Sämaschine, wobei jedoch am Fahrwerksrahmen anstelle der Stützräder eine Bodenwalze angeordnet ist.

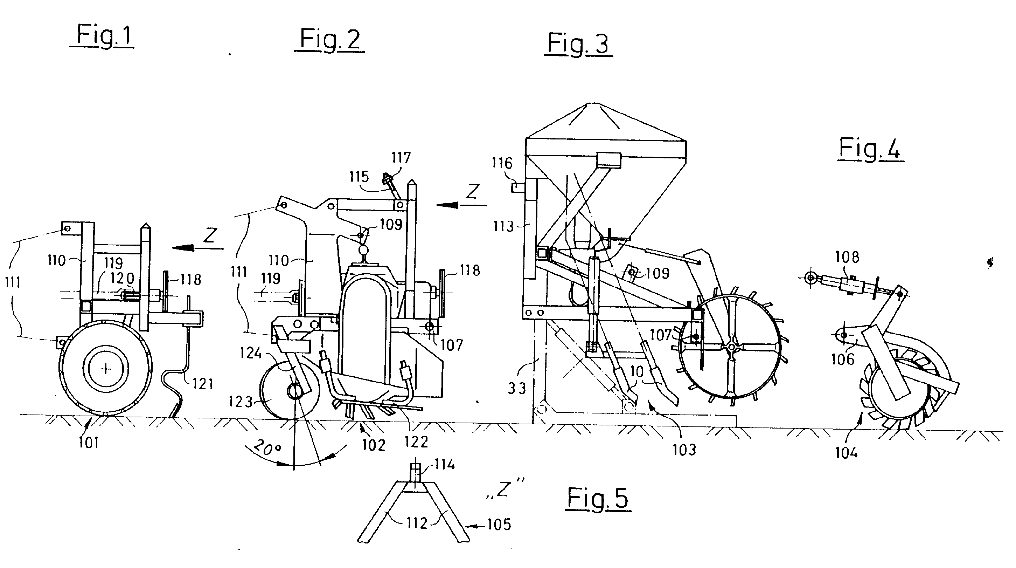

Eine in den Figuren 1 bis 5 dargestellte besonders bevorzugte Ausführungsform des erfindungsgemäßen Gerätesystems umfaßt das in Fig. 1 dargestellte Fahrwerk 101, das in Fig. 2 dargestellte Zinkenrotorgerät 102, die in Fig. 3 dargestellte Sämaschine 103 sowie das in Fig. 4 dargestellte Boden- bzw. Krümlerwalzengerät 104.

In weiter unten dargestellter Weise läßt sich die Sämaschine 103 ohne größeren Arbeitsaufwand sowohl auf das Fahrwerk 101 als auch auf das Zinkenrotorgerät 102 aufsatteln, so daß die Sämaschine 103 vom Fahrwerk 101 bzw. vom Zinkenrotorgerät 102 getragen werden kann. Dabei wird die Sämaschine 103 auf dem Stützrahmen 105 (vgl. auch Fig. 5) des Fahrwerks 101 bzw. des Zinkenrotorgerätes 102 spielfrei gehalten.

Das Boden- bzw. Krümlerwalzengerät 104 kann wahlweise unmittelbar am Zinkenrotorgerät 102 oder am Rahmen der Sämaschine 103 angeordnet werden. Die Anordnung an der Sämaschine 103 ist unabhängig davon möglich, ob die Sämaschine 103 auf das Fahrwerk 101 oder das Zinkenrotorgerät 102 aufgesattelt ist.

Gegebenenfalls kann das Boden- bzw. Krümlerwalzengerät 104 auch am Rahmen des Fahrwerkes 101 angeordnet werden, wenn dessen Räder bzw. die die Räder tragende Achsanordnung demontiert werden.

Das Boden- bzw. Krümlerwalzengerät 104 wird jeweils nach Art einer Schwinge angekoppelt, indem am Rahmen des Boden- bzw. Krümlerwalzengerätes 104 angeordnete gelenkaugenartige Laschen 106 mittels Bolzen scharnierartig an Anschlußteilen 107 am Rahmen der Sämaschine 103 bzw. des Zinkenrotorgerätes 102 befestigt werden. Die Höheneinstellung des Boden- bzw. Krümlerwalzengerätes 104 relativ zu dem davor angeordneten Gerät erfolgt mittels eines Abstützaggregates 108, welches einerseits an einem nach oben gerichteten Arm des Rahmens des Boden- bzw. Krümlerwalzengerätes 104 angelenkt ist und andererseits an Anlenkpunkten 109 am Rahmen der Sämaschine 103 bzw. des Zinkenrotorgerätes 102 schwenkbar befestigt werden kann.

Sowohl das Fahrwerk 101 als auch das Zinkenrotorgerät 102 besitzen ein bockartiges Rahmenteil 110, welches im Falle des Zinkenrotorgerätes 102 im Hinblick auf das hohe Gewicht des Gerätes und dessen große Beanspruchung bei der Bodenbearbeitung besonders stabil ausgebildet ist. Am bockartigen Rahmenteil 110 sind jeweils untere Anschlußpunkte für zwei Unterlenker und obere Anschlußpunkte für einen Oberlenker eines am Zugfahrzeug bzw. an einem Traktor angeordneten Dreipunktgestänges 111 angeordnet, um das Fahrwerk 101 bzw. das Zinkenrotorgerät 102 unmittelbar am Zugfahrzeug bzw. Traktor haltern zu können. Mittels des Dreipunktgestänges 111 kann das angekoppelte Gerät relativ zum Zugfahrzeug bzw. Traktor höhenbeweglich gehalten werden, wie es in der Regel für die Bodenarbeit erforderlich ist. Darüber hinaus gibt das Dreipunktgestänge 111 auch die Möglichkeit, das angekoppelte Gerät anzuheben bzw. in einer vorgegebenen Höhe relativ zum Zugfahrzeug bzw. Traktor zu halten.

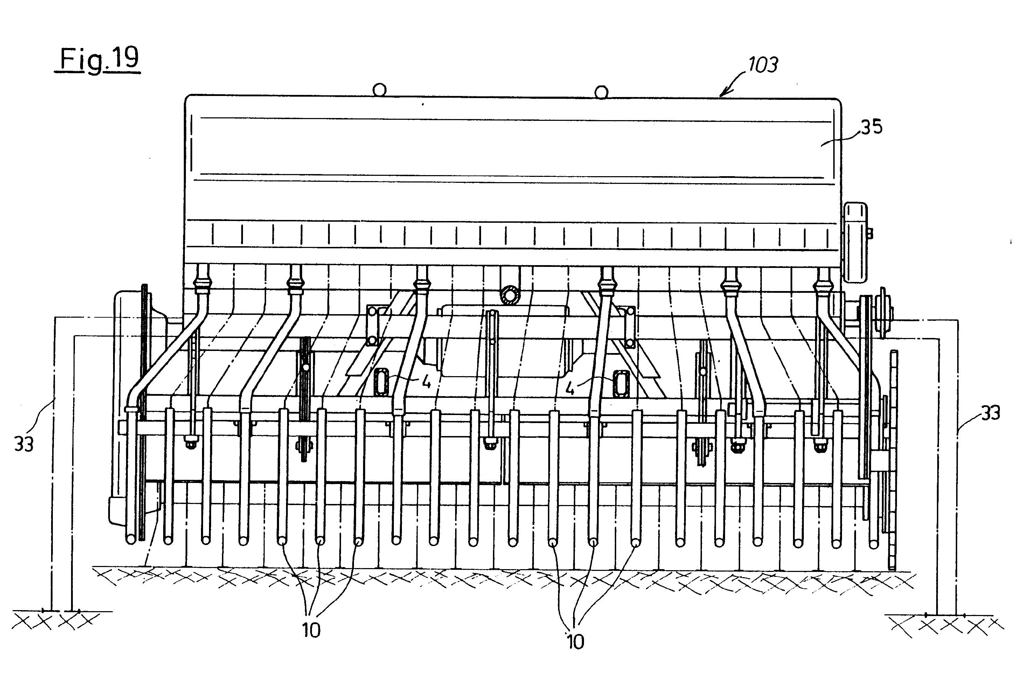

Die Möglichkeit, das angekoppelte Gerät anzuheben, d.h. relativ zum Zugfahrzeug bzw. Traktor vertikal zu bewegen, wird beim Aufsatteln der Sämaschine 103 auf das Fahrwerk 101 bzw. das Zinkenrotorgerät 102 ausgenutzt. Bei Nichtgebrauch kann die Sämaschine 103 mittels Ständer 33 abgestellt werden, die an einem Querbalken des Sämaschinenrahmens anbringbar sind und zusammen mit dem Rahmen ein Portal bilden, vgl. auch die Figur 19. Nunmehr werden das Fahrwerk 101 bzw. das Zinkenrotorgerät 102 nach Kupplung mit dem Dreipunktgestänge 111 in eine Position rangiert, in der der Stützrahmen 105 eine Lage hat, bei der die Schrägglieder 112 des Stützrahmens 105 eine Lage unterhalb von entsprechend schräg angeordneten Aufnahmeteilen 113 am Sämaschinenrahmen einnehmen. Die Aufnahmeteile 113 können beispielsweise als U-Profile ausgebildet sein, in die die Schrägglieder 112 des Stützrahmens 105 durch Anheben des Fahrwerkes 101 bzw. des Zinkenrotorgerätes 102 mittels des Dreipunktgestänges 111 eingeschoben werden können. Diese Einschubbewegung kann dadurch erleichtert werden, daß die Stützen 33, wie in Fig. 3 dargestellt ist, in ihrer Neigung verstellbar sind. Darüber hinaus kann am Stützrahmen 105 eine nach oben gerichtete Führungsstange 114 angeordnet sein, deren freies oberes Ende in der in den Figuren 1 und 2 dargestellten Seitenansicht dachartig ausgebildet ist und mit zwischen den Aufnahmeteilen 113 des Sämaschinenrahmens angeordneten Führungsblechen zusammenwirkt, um das Einschieben des Stützrahmens 105 in die Aufnahmeteile zu vereinfachen. Sobald die Aufnahmeteile 113 auf den Schräggliedern 112 des Stützrahmens 105 fest aufliegen, wird die Lage des Sämaschinenrahmens auf dem Stützrahmen 105 unbeweglich gesichert. Dazu dient beispielsweise ein gemäß Fig. 2 am Stützrahmen 105 schwenkbar befestigtes Gewindeteil 115, welches bei auf dem Stützrahmen 105 aufsitzendem Sämaschinenrahmen in eine nach vorn geöffnete U-förmige Aussparung an einem Fortsatz 116 des Sämaschinenrahmens eingeklappt werden kann. Sodann wird eine auf dem Gewindeteil 115 schraubverschiebbare Mutter 117 gegen die Oberseite des genannten Fortsatzes 116 gespannt, um den Sämaschinenrahmen bzw. dessen Aufnahmeteile 113 spielfrei auf den Schräggliedern 112 des Stützrahmens 105 festzuspannen.

Auch das Ankoppeln des Boden- bzw. Krümlerwalzengerätes 104 an das Zinkenrotorgerät 102 bzw. die Sämaschine 103 wird durch die Hubverstellbarkeit des Dreipunktgestänges 111 wesentlich erleichtert. Durch entsprechendes Rangieren des Zugfahrzeuges bzw. Traktors sowie durch Hubverstellung des angekoppelten Gerätes lassen sich die Anschlußteile 107 in eine Lage bringen, in der sie ohne größere Schwierigkeiten mit den Laschen 106 des Rahmens des Boden- bzw. Krümlerwalzengerätes 104 verbunden werden können.

Das in Fig. 1 dargestellte Fahrwerk 101 weist insofern eine Besonderheit auf, als am Fahrwerksrahmen eine Riemenscheibe 118 od.dgl. drehgelagert ist, welche vom Zugfahrzeug bzw. Traktor aus mittels einer Zapfwelle 119 antreibbar ist, die ihrerseits mit einem verzahnten Ende 120 der Riemenscheibenachse gekoppelt werden kann. Auf diese Weise wird eine einfache Möglichkeit geschaffen, bei Bedarf eine auf das Fahrwerk 101 aufgesattelte Sämaschine über die Zapfwelle 119 anzutreiben. Dies ist insbesondere dann von Bedeutung, wenn sogenannte pneumatische Sämaschinen eingesetzt werden sollen, bei denen das Saatgut mittels eines über die Zapfwelle 119 anzutreibenden Gebläses in die Saataustragsröhren od.dgl. der Sämaschine gefördert werden müssen.

Des weiteren können am Fahrwerk 101 scharwerkzeugartige Federzinken 121 angeordnet sein, welche den Boden für den Austrag des Saatgutes mittels der auf das Fahrwerk 101 aufsattelbaren Sämaschine 103 vorbereiten.

Grundsätzlich können die Federzinken 121 jedoch auch am Rahmen der Sämaschine 103 angeordnet sein.

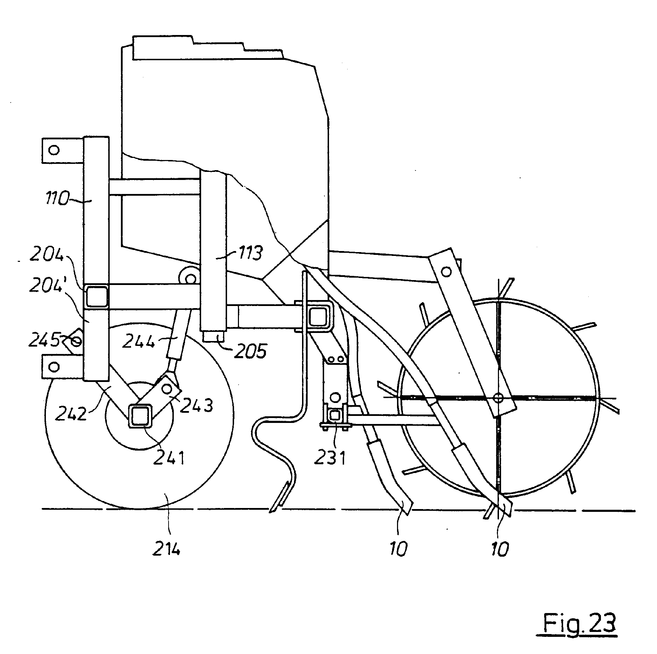

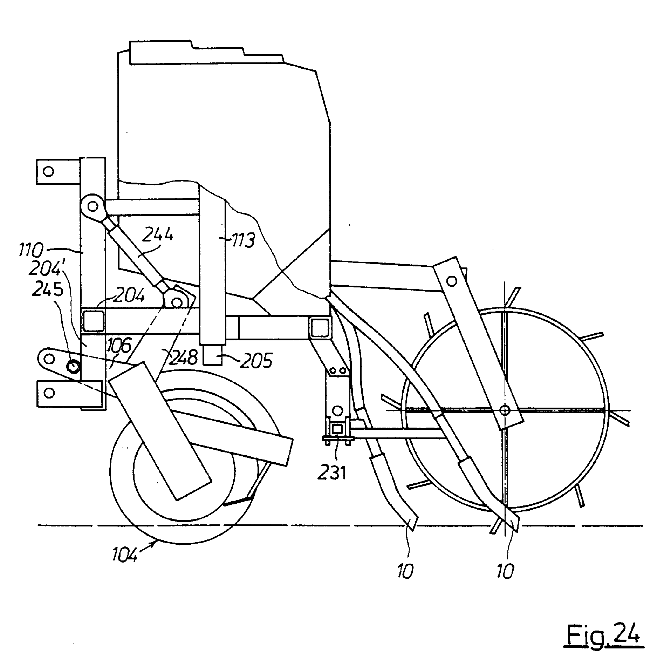

Gemäß den Figuren 23 und 24 können Querbalken 204 und 205 des Fahrwerkes 101 mit besonders großem Bodenabstand angeordnet sein. Dabei bildet der vordere Querbalken 204 in Frontansicht des Gerätes ein Portal, indem an den seitlichen Enden des Querbalkens 204 nach abwärts gerichtete Endstücke 204' angeordnet sind. Zwischen den Endstücken 204' kann ein Achsaggregat für die Räder 214 gehaltert werden.

Das Achsaggregät besteht im wesentlichen aus einer beispielsweise durch ein stabiles Rohr gebildeten Achse 241, welche die Räder 214 trägt und mittels an ihr fest angeordneter Längslenker 242 um eine Querachse schwenkbar an den Endstücken 204' des vorderen Querbalkens 204 angelenkt ist. Zur gelenkigen Verbindung zwischen den Endstücken 204' und den Längslenkern 242 dienen beispielsweise Stifte 245, welche miteinander fluchtende Bohrungen an den Endstücken 204' sowie den Längslenkern 242 durchsetzen. Des weiteren ist an der Achse 241, etwa im Mittelbereich derselben, ein schräg nach oben und hinten gerichteter Arm 243 fest angeordnet, welcher gelenkig mit dem einen Ende einer Spindel 244 verbunden ist, deren anderes Ende gelenkig an einem Teil des Fahrwerkrahmens, beispielsweise am hinteren Querbalken 205, angelenkt ist. Durch Längenveränderung der Spindel 244 kann die Lage der Achse 241 in Vertikalrichtung verändert werden.

Gemäß Fig. 24 kann das Boden- bzw. Krümlerwalzengerät 104 in prinzipiell gleicher Weise wie das Achsaggregat mit dem Rahmen des Fahrwerkes 101 verbunden werden.

Zur Ankopplung an ein vorauslaufendes Gerät besitzt der Rahmen des Boden- bzw. Krümlerwalzengerätes 104 Laschen bzw. Längslenker 106, welche sich in gleicher Weise wie die Längslenker 242 des Achsaggregates (vgl. Fig. 23) mit den Endstücken 204' des vorderen Querbalkens 204 gelenkig verbinden lassen, so daß der Rahmen des Boden- bzw. Krümlerwalzengerätes 104 um eine durch die Stifte 245 gebildete Querachse relativ zum Rahmen des Fahrwerkes 101 zu schwenken vermag. Zwischen einem am Rahmen des Boden- bzw. Krümlerwalzengerätes angeordneten Arm 248 und einem Teil des Rahmens des Fahrwerkes 101, beispielsweise dem bockartigen Rahmenteil 110, ist wiederum die Spindel 244 angeordnet, deren Längenabmessung die Lage der Walze relativ zum Fahrwerksrahmen in Vertikalrichtung bestimmt.

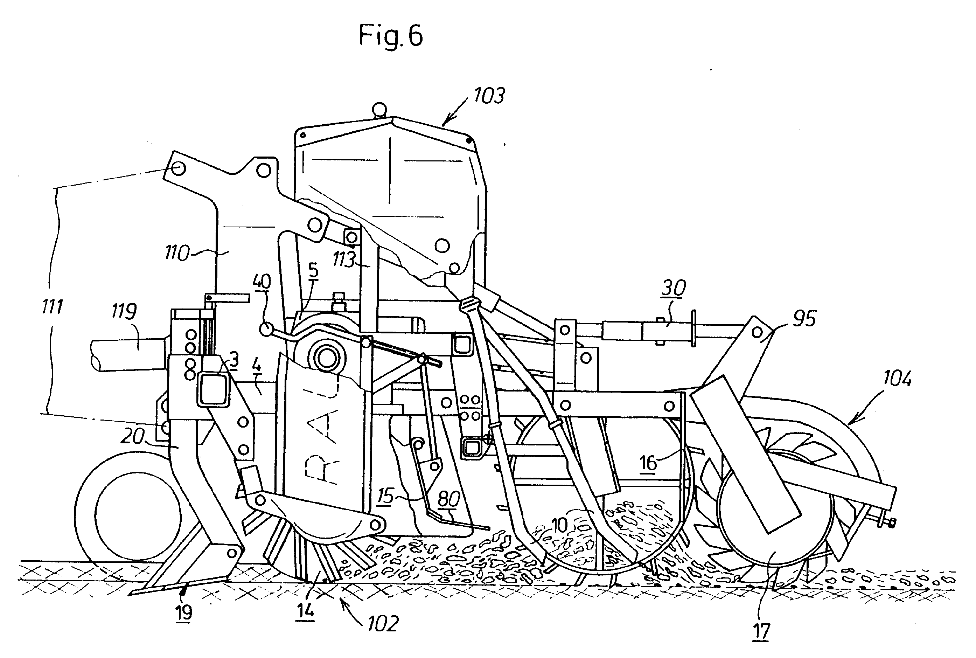

Bei dem in Fig. 2 dargestellten Zinkenrotorgerät 102 ist das bockartige Rahmenteil 110 ebenso wie bei dem in Fig. 6 dargestellten Zinkenrotorgerät 110 als Teil eines Tragrahmens angeordnet, welcher den Zinkenrotor 14 trägt und an der Gerätevorderseite einen stabilen Querbalken 3 sowie kurze Längsbalken 4 besitzt. Dabei sind die die Enden der Rotorwelle lagernden Seitenteile des Rotorgehäuses an dem Querbalken 3 sowie an einem in Gerätequerrichtung angeordneten Rohr abgestützt, welches mit den Längsbalken 4 verbunden und beiderseits eines im Raum zwischen den Längsbalken 4 und dem bockartigen Rahmenteil 110 untergebrachten Gehäuses 5 für ein Getriebe des Zinkenrotors 14 als mittragendes Teil angeordnet ist. Zum Antrieb des Zinkenrotors 14 dient eine mit einem Getriebeanschluß des Zugfahrzeuges bzw. Traktors verbindbare Zapfwelle 119, welche das im Gehäuse 5 untergebrachte Getriebe treibt. Dies ist seinerseits über eine in dem vorgenannten Rohr untergebrachte Welle mit Getriebeelementen im einen Seitenteil des Zinkenrotorgerätes 102 und damit mit der Rotorwelle antriebsmäßig verbunden.

Im übrigen besitzt das im Gehäuse 5 untergebrachte Getriebe noch einen weiteren Getriebeausgang zum Antrieb einer dort angeordneten Riemenscheibe 118 od.dgl., welche es beispielsweise ermöglicht, eine auf das Zinkenrotorgerät 102 aufgesattelte pneumatische Sämaschine od.dgl. anzutreiben, wie oben im Zusammenhang mit dem Fahrwerk 101 beschrieben wurde.

An den die Enden der Rotorwelle lagernden Seitenteilen des Rotorgehäuses können gemäß Fig. 2 Kufen 122 angeordnet sein, welche eine unmittelbare Bodenberührung der Seitenteile verhindern. Um zu vermeiden, daß an den Kufen 122 langsträhnige Pflanzenreste od.dgl. hängenbleiben können, sind vor den Kufen 122 Zuführscheiben 123 drehbar angeordnet, welche in Draufsicht auf das Gerät 102 einen in Fahrtrichtung geöffneten Trichter bilden und dementsprechend bei der Bodenarbeit Erde und auf der Bodenoberfläche liegende Pflanzenreste aus dem Bereich vor den Kufen 122 in den Wirkungsbereich des Rotors 14 schieben. Die die Zuführscheiben 123 halternden Stiele 124 sind am Querbalken 3 höhenverstellbar angeordnet. Um zu ermöglichen, daß die Zuführscheiben 123 unmittelbar vor den Kufen 122 arbeiten und damit die Kufen besonders wirksam von Pflanzensträhnen u.dgl. freihalten, sind die Stiele 124 in der aus Fig. 2 ersichtlichen Weise schräg angeordnet.

Der Zinkenrotor 14 wird in einer die Fahrtrichtung des Gerätes unterstützenden Umlaufrichtung, d.h. in den Figuren 2 und 6 in einer Drehrichtung entgegen dem Uhrzeigersinn, angetrieben.

Auf seiner Oberseite ist der Zinkenrotor 14 gehäuseartig abgedeckt, wobei sich die Abdeckung nach hinten in eine um eine Querachse schwenkbare Klappe 15 fortsetzt (vgl. Fig. 6), deren Lage mittels Kurbel 40 od.dgl. einstellbar ist. Damit läßt sich der vom Zinkenrotor 14 erzeugte und nach hinten geworfene Erdstrom nach oben begrenzen.

Um zusätzlich die Streuung des Erdstromes nach oben zu vermindern, kann am freien Rand der Klappe 15 eine flexible Matte 80 angeordnet sein, deren Abmessungen größenordnungsmäßig den Abmessungen der Klappe 15 entsprechen. Dabei ist die Steifigkeit der Matte 80 etwa so bemessen, daß die Matte 80 vom Erdstrom, welcher vom Zinkenrotor 14 nach hinten geworfen wird, etwa in eine Horizontallage gebracht wird. Aufgrund der Anordnung der Matte 80 wird ein Erdstrom erzeugt, welcher nach oben durch eine Grenzschicht mit geringem Querschnitt begrenzt ist. Aufgrund der Nachgiebigkeit der Matte führt dieselbe laufend mehr oder weniger ausgeprägte Flatter- und Walkbewegungen aus, welche es verhindern, daß an der Matte 80 Erde haften bleibt. Aufgrund der Anordnung der Matte 80 bedeckt der vom Zinkenrotor 14 erzeugte Erdstrom besonders gleichmäßig das Saatgut, welches mittels hinter dem Zinkenrotor angeordneter Saatauslaufrohre 10 der Sämaschine 103 in bzw. unter den vom Zinkenrotor 14 erzeugten Erdstrom ausgebracht werden kann.

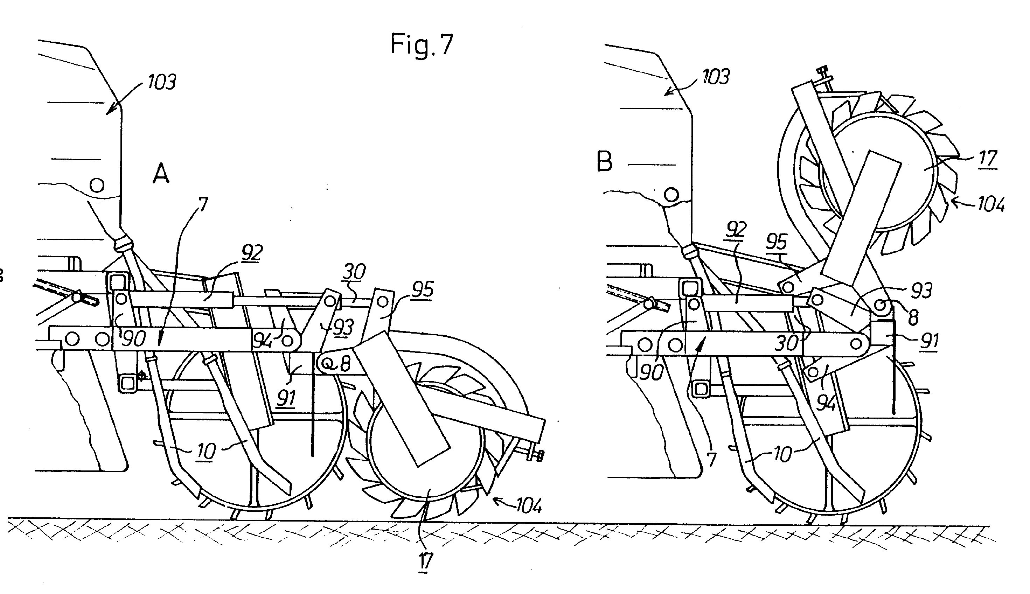

In Abweichung von den in den Figuren 2 bis 4 dargestellten Geräten, bei denen das Boden- bzw. Krümlerwalzengerät 104 bei einer Kombination des Zinkenrotorgerätes 102 mit der Sämaschine 103 am Rahmen der Sämaschine 103 angeordnet wird, ist bei den Ausführungsformen nach den Figuren 6 und 7 vorgesehen, das Boden- bzw. Krümlerwalzengerät 104 mit dem Rahmen des Zinkenrotorgerätes 102 zu verbinden.

Dazu schließt sich an die Längsbalken 4 des den Zinkenrotor 14 tragenden Rahmens ein Zwischenrahmen 7 an, welcher seinerseits mit dem Rahmen des Boden- bzw. Krümlerwalzengerätes 104 verbunden ist.

Der Zwischenrahmen 7 kann eine Plattform aus Gitterrosten od.dgl. bilden bzw. tragen, die als Standfläche für den Gerätebenutzer dient, wenn der Saatgutbehälter 35 der auf das Zinkenrotorgerät 102 aufgesattelten Sämaschine 103 inspiziert bzw. gefüllt werden soll.

Am walzenseitigen Rand der Plattform bzw. des Zwischenrahmens 7 ist ein Vorhang 16 angeordnet, welcher verhindert, daß der vom Zinkenrotor 14 aufgeworfene Erdstrom unmittelbar auf die Walze 17 auftreffen kann. Die der Walze zugewandte Rückseite des Vorhanges 16 besitzt eine grellbunte Färbung, beispielsweise in Form eines rot-weißen Streifenmusters. Diese Rückseite wird in Heckansicht des Gerätes vollständig sichtbar, wenn das Boden- bzw. Krümlerwalzengerät 104 aus der in Fig. 6 dargestellten Arbeitslage in eine Transportlage oberhalb des Zwischenrahmens 7 hochgeschwenkt wird (vgl. Fig. 7). Damit wird der nachfolgende Verkehr beim Transport des Gerätes zu erhöhter Aufmerksamkeit veranlaßt.

Bei Geräten mit sehr großer Arbeitsbreite genügt es in der Regel aus Stabilitätsgründen nicht, wenn der Rahmen des Boden- bzw. Krümlerwalzengerätes 104 lediglich an einem die Längsbalken 4 verlängernden Zwischenrahmen 7 gehaltert ist. In diesem Falle werden auf der Oberseite des Rotorgehäuses zusätzliche, von den Längsbalken 4 beabstandete Längsbalken nahe den Außenseiten des Gerätes angeordnet. Dabei können die vorderen Enden dieser zusätzlichen Längsbalken mit dem Querbalken 3 verbunden sein. Im übrigen werden die Außenseiten des Rotorgehäuses bzw. die zusätzlichen Längsbalken noch durch nicht dargestellte Stangen gegen den oberen Bereich des bockartigen Rahmenteiles 110 abgestützt.

Zur hochschwenkbaren Halterung des Boden- bzw. Krümlerwalzengerätes 104 ist an den hinteren Enden der die Längsbalken 4 verlängernden Balken des Zwischenrahmens 7 bzw. an den hinteren Enden der zusätzlichen Längsbalken ein Querbalken 91 um eine Gerätequerachse schwenkbar gelagert. Zur Schwenkung des Querbalkens 91 dienen im wesentlichen horizontal angeordnete Kolben-Zylinder-Aggregate 92, die oberhalb des Zwischenrahmens 7 bzw. der zusätzlichen Längsbalken an rahmenfesten Haltearmen 90 und andererseits an drehfest mit dem Querbalken 91 verbundenen Kurbelarmen 93 angelenkt sind. Durch entsprechende Betätigung der Kolben-Zylinder-Aggregate 92 kann der Querbalken 91 zwischen den in Fig. 7 dargestellten Endlagen verschwenkt werden.

Am Querbalken 91 ist der Rahmen des Boden- bzw. Krümlerwalzengerätes 104 um eine weitere Querachse 8 schwenkbar angeordnet. Zur Abstützung des Rahmens des Boden- bzw. Krümlerwalzengerätes 104 gegenüber dem Querbalken 91 dient eine Abstützanordnung 30, welche zwischen einem am Querbalken 91 etwa in dessen Mitte angeordneten Haltearm 94 und einem entsprechenden, am Rahmen des Boden- bzw. Krümlerwalzengerätes 104 angeordneten Haltearm 95 angeordnet ist. Die Abstützanordnung 30 wird normalerweise auf Druck beansprucht, weil die Walze 17 das Gerät bei der Bodenarbeit abstützt. Jedoch besitzt die Abstützanordnung 30 ein gewisses Spiel, welches es ermöglicht, daß die Geräteteile vor der Walze beim Auftreffen auf Bodenhindernisse u.dgl. nach oben ausweichen können, ohne daß auch die Walze 17 gleichzeitig angehoben werden muß. In diesem Falle kann sich die Abstützanordnung 30 um ein durch das Spiel vorgegebenes Maß verlängern.

Die Abstützanordnung 30 ist teleskopartig ausgebildet, wobei das gesamte, vorzugsweise einstellbare Bewegungsspiel den teleskopierbaren Teilen Relativbewegungen gegeneinander ermöglicht. Innerhalb der Abstützanordnung 30 kann ein weiteres Kolben-Zylinder-Aggregat angeordnet sein, welches dazu dient, die Abstützanordnung 30 so weit als möglich zu verkürzen, wenn der Querbalken 91 zum Hochklappen des Boden- bzw. Krümlerwalzengerätes 104 verschwenkt wird. Damit werden die Elemente der Abstützanordnung 30 spielfrei gegeneinander gespannt gehalten, gleichzeitig wird gewährleistet, daß die Walze 17 in der hochgeschwenkten Lage so weit als möglich nach vorn verlagert wird. Dementsprechend verlagert sich auch der Schwerpunkt des Gesamtgerätes nach vorn. Dies ist dann wesentlich, wenn das Gesamtgerät mittels des Hub- bzw. Dreipunktgestänges 111 an ein vergleichsweise leichtes Zugfahrzeug angekoppelt ist und aus der Arbeitslage in eine ausgehobene Lage, insbesondere für den Transport, angehoben werden soll. Da sich der Schwerpunkt des Gesamtgerätes bei hochgeklappter Walze zum Fahrzeug hin verlagert, wirkt das Gesamtgewicht des Gerätes relativ zum Fahrzeug nur mit einem vergleichsweise kurzen Hebelarm. Dementsprechend wird die Vorderachse des Zugfahrzeuges bzw. Traktors bei angehobenem Gerät weniger stark entlastet.

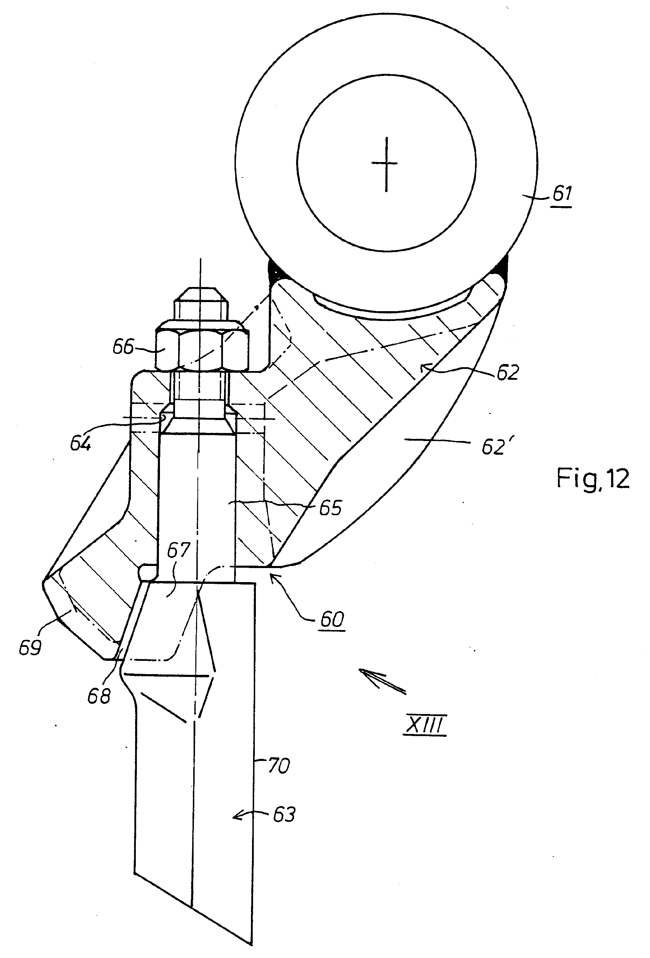

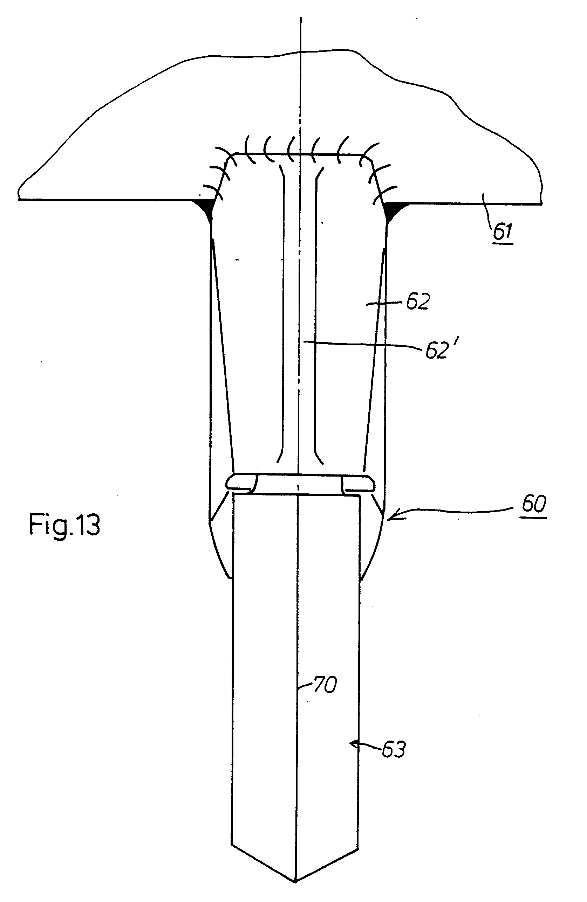

Die Zinken 60 des Rotors besitzen entsprechend den Figuren 12 und 13 einen an der Rotorwelle 61 angeschweißten Haltearm 62, welcher als Schmiedeteil formtechnisch so ausgebildet ist, daß die Mittelrippe 62′ des Haltearmes 62 bodentrennende Wirkung hat und die Keilkante 70 eines am Haltearm 62 austauschbar gehalterten Zinkenendstückes 63 bis zur Rotorwelle 61 fortsetzt. Zinkenendstück 63 und Haltearm 62 bilden einen in Umlaufrichtung geöffneten stumpfen Winkel, derart, daß die Längsachse des Zinkenendstückes 63 mit radialem Abstand von der Achse der Rotorwelle 61, tangential zu derselben, erstreckt ist. Zur Halterung des Zinkenendstückes 63 am Haltearm 62 dient eine darin angeordnete Bohrung 64, in die das Zinkenendstück 62 mit einem zapfenartigen Einsteckteil 65 einsetzbar ist. Das Einsteckteil 65 besitzt einen mit Gewinde versehenen Endabschnitt, auf den eine Mutter 66 aufgeschraubt ist, um das Einsteckteil 65 in der aus Fig. 12 ersichtlichen Weise in der Bohrung 64 bzw. am Haltearm festzuhalten.

Gegebenenfalls kann die Mutter 66 auch den Kopf einer in eine Gewindebohrung im Einsteckteil 65 einschraubbaren Schraube bilden.

Durch entsprechendes Anziehen der Mutter 66 werden Schrägflächen 67 und 68 keilartig gegeneinander gespannt. Die Schrägflächen 67 sind im Anschluß an das Einsteckteil 65 am Zinkenendstück 63 auf dessen entgegen der Umlaufrichtung weisender Seite prismatisch zueinander angeordnet. Die entsprechenden Gegenschrägflächen 68 befinden sich an einem Wulst 69, welcher zur Abstützung des Zinkenendstückes 63 auf dessen entgegen der Umlaufrichtung weisender Seite am Haltearm 62 angeformt ist. Aufgrund der genannten Schrägflächen 67 und 68 kann trotz Fertigungstoleranzen ohne weiteres erreicht werden, daß die Zinkenendstücke 63 am Wulst 69 fest anliegen und dementsprechend gut abgestützt werden. Dazu muß lediglich die Mutter 66 entsprechend stark angezogen werden. Im übrigen sucht sich das Zinkenendstück 63 aufgrund des vom Boden erzeugten Widerstandes bei der Bodenarbeit zusätzlich in die Aufnahmebohrung 64 einzuschieben, wobei die Schrägflächen 67 und 68 entsprechend verstärkt aufeinandergedrückt werden.

Der in den Boden eingreifende Bereich des Zinkenendstückes 63 besitzt einen im wesentlichen rautenförmig quadratischen Querschnitt, derart, daß eine in Umlaufrichtung weisende Schlag- bzw. Keilkante 70 gebildet wird. Damit kann der Zinken 60 erfaßte Erde unter Zertrümmerung und Zerkleinerung fester Erdbrocken und Pflanzenreste od.dgl. nach hinten und zur Seite werfen. Dabei arbeitet der Rotor mit vergleichsweise großer Rotationsgeschwindigkeit. Aufgrund der hohen Rotationsgeschwindigkeit wird gleichzeitig der Vorteil erzielt, daß der Rotor mit vergleichsweise wenig Zinken ausgerüstet sein kann, insbesondere genügt es, wenn je Strichebene des Zinkenrotors nur ein Zinken 60 angeordnet ist. Damit wird bei guter Arbeitsleistung gleichzeitig der Vorteil erzielt, daß sich der Zinkenrotor nicht verstopfen kann.

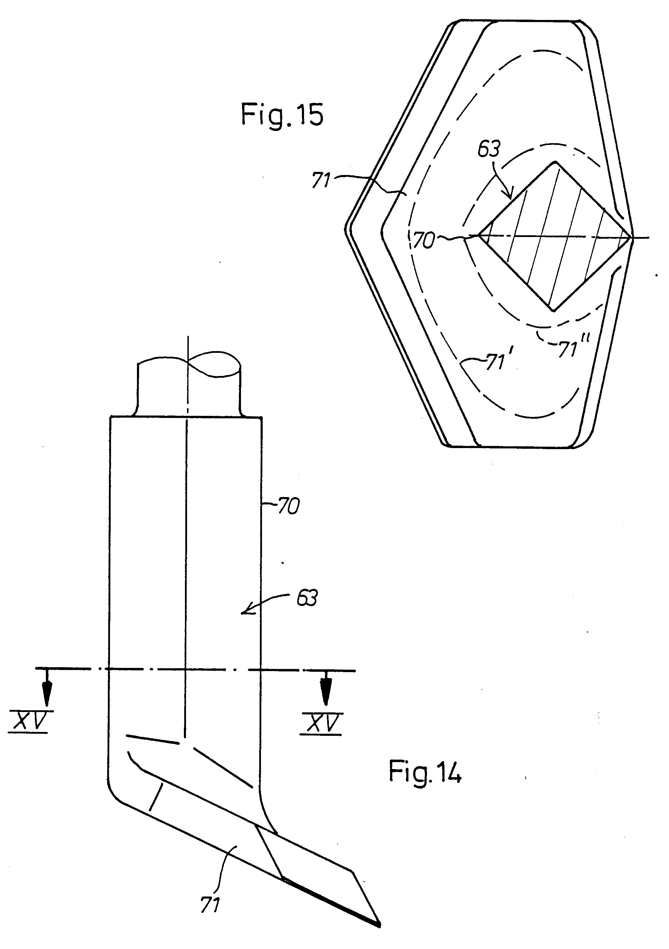

Gemäß den Figuren 14 und 15 können an den freien Enden der Zinkenendstücke Scharblätter 71 angeordnet sein, um die Mulchwirkung der Zinken noch weiter zu verbessern. Dabei ist jedes Scharblatt 71 derart ausgerichtet, daß es in Achsansicht des Zinkenrotors mit einem von der Achse der Rotorwelle 61 zum Verbindungsbereich zwischen Zinkenendstück 63 und Scharblatt 71 geführten Radialstrahl einen stumpfen, in Umlaufrichtung geöffneten Winkel bildet. Dementsprechend sucht das Scharblatt 71 die erfaßte Erde beim Eindringen in den Boden zur Rotorachse hin anzuheben (sogenannte Anschnittwirkung), so daß keinerlei Schmierspuren im Boden hinterlassen werden können.

Eine Besonderheit der Scharblätter 71 liegt darin, daß der in Umlaufrichtung weisende gepfeilte Vorderrand jedes Scharblattes 71 in relativ großem Abstand vor der Schlag- bzw. Keilkante 70 des Zinkenendstückes 63 angeordnet ist, während der entgegen der Umlaufrichtung weisende Rand des Scharblattes 71, welcher in Rückwärtsrichtung leicht gepfeilt ist, etwa in gleicher Ebene mit der entgegen der Umlaufrichtung weisenden Seite des Zinkenendstückes 63 liegt, vgl. Fig. 15. Diese Form und Anordnung des Scharblattes 71 sind insofern vorteilhaft, als sich das Scharblatt 71 durch Verschleiß bei der Bodenarbeit entsprechend den strichlierten Linien 71′ und 71″ relativ gleichmäßig verkleinert, ohne daß vom Zinkenendstück 63 nach seitwärts oder rückwärts abstehende dornartige Bereiche mit geringem querschnitt gebildet werden. Derartige dornartige Teile können aufgrund weiteren Verschleißes abbrechen und auf dem jeweils bearbeiteten Feld liegenbleiben. Bei der jeweils nächsten Bodenbearbeitung besteht dann die Gefahr, daß diese Metallteile vom jeweiligen Bodenbearbeitungsgerät hochgeschleudert werden und unter Umständen Personen gefährden.

Diese Gefahr besteht also bei der erfindungsgemäßen Anordnung und Form des Scharblattes 71 nicht. Vielmehr wird dasselbe durch zunehmenden Verschleiß lediglich auf den Querschnitt des Zinkenendstückes 63 verkleinert

Auch bei Verwendung der in den Figuren 14 und 15 dargestellten Zinkenendstücke besitzt der Zinkenrotor 14 bevorzugt nur relativ wenige Zinken, insbesondere wiederum je Strichebene nur einen Zinken, und wird mit verhältnismäßig hoher Geschwindigkeit angetrieben. Dadurch wird Bodenbewuchs total losgelöst. Gleichzeitig wird der Boden, ohne Schmierspuren zu verursachen, erfaßt und bearbeitet, und zwar bei sehr guter Durchmischung. Andererseits wird aufgrund der hohen Schlaggeschwindigkeit eine besonders gute Zerkleinerungs- bzw. Zertrümmerungswirkung erreicht. Dies führt dazu, daß die erfaßte Erde unter Erzeugung eines relativ "durchsichtigen" und aus sehr kleinen Partikeln bestehenden Erdstromes mit hoher Geschwindigkeit nach hinten geworfen wird.

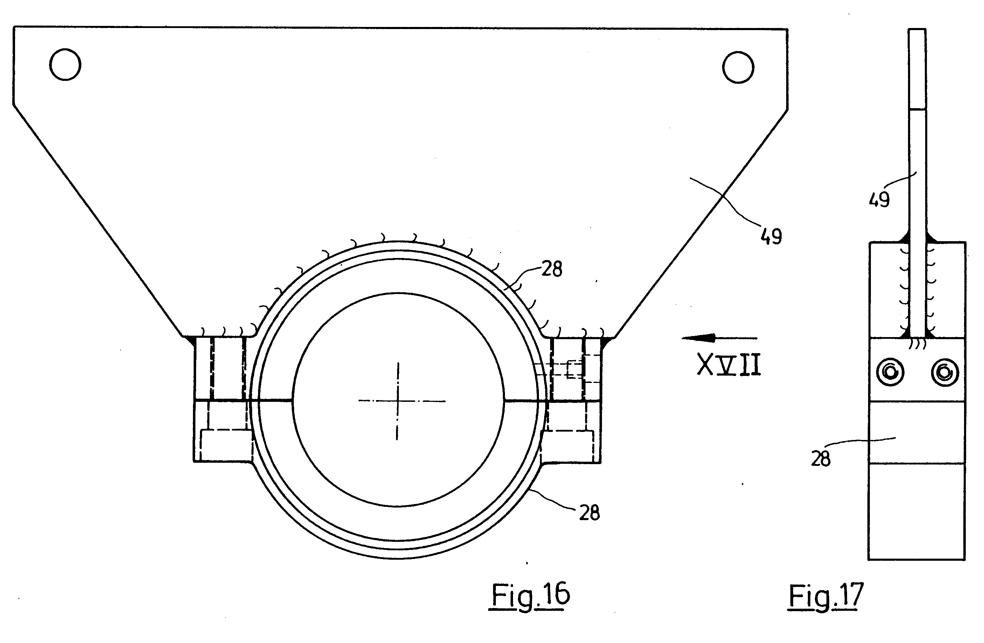

Bei sehr breiten Geräten kann es zweckmäßig sein, den Zinkenrotor 14 mit mehreren axial miteinander verbindbaren Abschnitten anzuordnen und zwischen den Abschnitten jeweils ein Zwischenlager vorzusehen. Dabei sind einerseits eine hohe Tragfähigkeit des Lagers und andererseits geringe axiale Abmessungen desselben erwünscht, weil andernfalls Lagerschäden zu befürchten bzw. relativ große axiale Abstände zwischen den Rotorzinken beiderseits des Zwischenlagers in Kauf zu nehmen wären. In den Figuren 16 bis 18 ist nun ein besonders schmal bauendes Zwischenlager hoher Tragfähigkeit dargestellt.

An den Enden der Rotorwellenabschnitte sind ringscheibenförmige Flansche 25 angeschweißt, wobei bevorzugt zwei Schweißnähte 46 vorgesehen sind, eine innerhalb der die Rotorwelle aufnehmenden Ringöffnung der Flansche 25 und eine am wellenseitigen Stirnrand der genannten Ringöffnung.

Zwischen den Flanschen sind zwei miteinander verbundene Kreisscheiben 26 gleichachsig angeordnet. Die Kreisscheiben 26 sind einerseits mittels einer zentralen Schraube 47 und andererseits mittels Bolzen 48 verbunden, welche in ringförmig zur Schraube 47 angeordneten Bohrungen der Kreisscheiben 26 aufgenommen sind. Gegebenenfalls können die Bolzen 48 dadurch in den zugehörigen Bohrungen der Kreisscheiben festgelegt werden, daß die Kreisscheiben 26 vor Einsetzen der Bolzen 48 etwas erwärmt bzw. erhitzt werden, um die die Bolzen 48 aufnehmenden Bohrungen geringfügig zu erweitern. Sodann werden die in die erweiterten Bohrungen passenden Bolzen 48 eingesetzt und beim nachfolgenden Erkalten der Kreisscheiben 26 mit großer Kraft festgehalten.

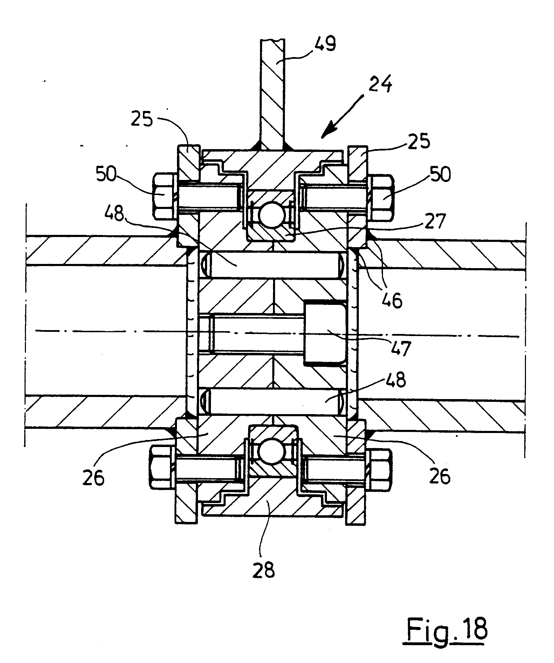

Am Außenumfang begrenzen die Kreisscheiben 26 gemeinsam eine Umfangsnut mit sich nach radial außen stufenförmig erweiterndem Querschnitt. Innerhalb des tiefen Mittelbereiches dieser Nut ist ein Radiallager 27, im Beispiel der Fig. 18 ein Kugellager, komplett mit seiner äußeren und inneren Lagerschale untergebracht. Statt des Kugellagers kann gegebenenfalls auch ein Rollenlager mit Vorteil eingesetzt werden. Die Anordnung des Radiallagers 27 erfolgt selbstverständlich vor der Verbindung der Kreisscheiben 26 miteinander. An einem vertikalen Längssteg 49, welcher im Gehäuse des Zinkenrotors 14 angeordnet ist bzw. einen Teil des Rahmens des Zinkenrotors 14 bildet, ist ein teilbares, die äußere Lagerschale des Radiallagers 27 ringförmig umschließendes Halteteil 28 angeordnet, dessen eine Hälfte mit dem Längssteg 49 verschweißt ist und dessen andere Hälfte in der aus Fig. 16 ersichtlichen Weise am Längssteg 49 bzw. an der damit verschweißten Hälfte des Halteteiles 28 mittels Schrauben verbindbar ist. Das Halteteil 28 besitzt einen der Umfangsnut der Kreisscheiben 26 beidseitig des Radiallagers 27 angepaßten Querschnitt, derart, daß zwischen dem Halteteil 28 und den Rändern der Kreisscheiben 26 ein labyrinthartig gestufter Ringspalt freibleibt.

Das Radiallager 27 kann mit einer Dauerschmierung in Form einer Schmierfettpackung versehen sein. Gegebenenfalls kann die Schmiermittelfüllung auch bei gelegentlicher Demontage von Zinkenrotorabschnitten erneuert werden. Die nur schematisch angedeuteten Verbindungsschrauben 50, mit denen die Flansche 25 der Rotorabschnitte an den Kreisscheiben 26 befestigt werden, können nämlich an den Kreisscheiben 26 in Gewindebohrungen eingedreht sein, die sich bis in dem das Radiallager 27 aufnehmenden Bereich der Umfangsnut zwischen den Kreisscheiben 26 erstrecken. Damit können diese Gewindebohrungen auch zur Nachführung von Schmiermittel dienen, wenn die jeweilige Schraube 50 herausgedreht wird.

Um verfestigte Erde im Bereich der vom Zugfahrzeug bzw. Traktor hinterlassenen Spurrillen aufzulockern, können an einem Querbalken des Zinkenrotorgerätes 102 Lockerungswerkzeuge 19 mittels ihrer Haltestiele 20 höhenverstellbar angeordnet sein. Im Hinblick auf eine möglichst kurze Bauweise des Gerätes und im Hinblick auf eine Anordnung desselben dicht hinter dem Zugfahrzeug bzw. Traktor sind die Haltestiele 20 nach rückwärts zum Zinkenrotor 14 hin abgebogen, so daß die Lockerungswerkzeuge 19 praktisch unmittelbar vor dem Wirkungsbereich des Zinkenrotors 14 arbeiten und die von den Lockerungswerkzeugen 19 aufgeworfene Erde ohne vorherige Ablage auf der Bodenoberfläche in den laufenden Zinkenrotor 14 gezogen wird.

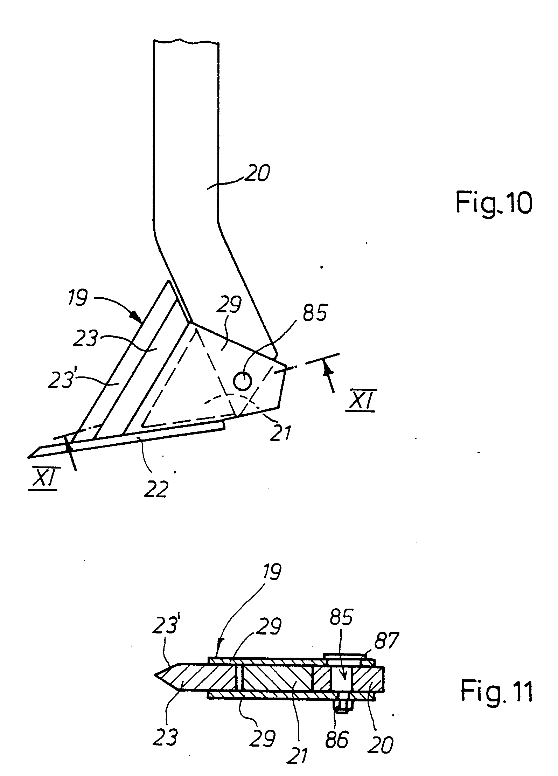

Die Lockerungswerkzeuge 19 sind bevorzugt austauschbar angeordnet. Dazu ist gemäß den Figuren 10 und 11 am jeweiligen Haltestiel 20 an dessen unterem Ende ein in Fahrtrichtung weisender dreiecksförmiger Fortsatz 21 angeordnet, auf den das Lockerungswerkzeug 19 nach Art eines Schuhes aufgesetzt werden kann. Dabei besitzt das Lockerungswerkzeug 19 ein unteres meißelartiges Teil 22, welches mit einem leistenartigen Teil 23 zu einem den Unter- und Vorderrand des Fortsatzes 21 umschließenden winkelförmigen Teil verbunden ist. Das vordere Ende des meißelartigen Teiles überragt etwas das leistenartige Teil 23, welches seinerseits an seinem in Fahrtrichtung nach vorn weisenden Rand einen Keil 23′ bildet. Auf beiden Seiten des Fortsatzes 21 sind am Lockerungswerkzeug 19 dreiecksartige Platten 29 angeordnet, deren Vorder- und Unterränder mit dem leistenartigen Teil 23 bzw. dem meißelartigen Teil 22 verschweißt sind. Zur unverlierbaren Halterung des Lockerungswerkzeuges 19 am zugeordneten Haltestiel 20 dient ein Exzenter 85, welcher einander überdeckende Bohrungen in den dreiecksartigen Platten 29 sowie im Haltestiel 20 durchsetzt. Durch entsprechende Drehung des Exzenters 85 werden die dreiecksartigen Platten 29 und damit das Lockerungswerkzeug 19 in Richtung der Rückseite des Haltestieles 20 gezogen. Dementsprechend kann auch bei eventuellen Fertigungstoleranzen ein sehr fester und sicherer Sitz des Lockerungswerkzeuges 19 am Haltestiel 20 gewährleistet werden. Zur Sicherung des Exzenters 85 dient eine auf einen Gewindeteil desselben aufschraubbare Mutter 86, welche es ermöglicht, daß die dreiecksförmigen Platten 29 zwischen der Mutter 86 und dem Kopf 87 des Exzenters 85 gegen den Haltestiel 20 gespannt werden.

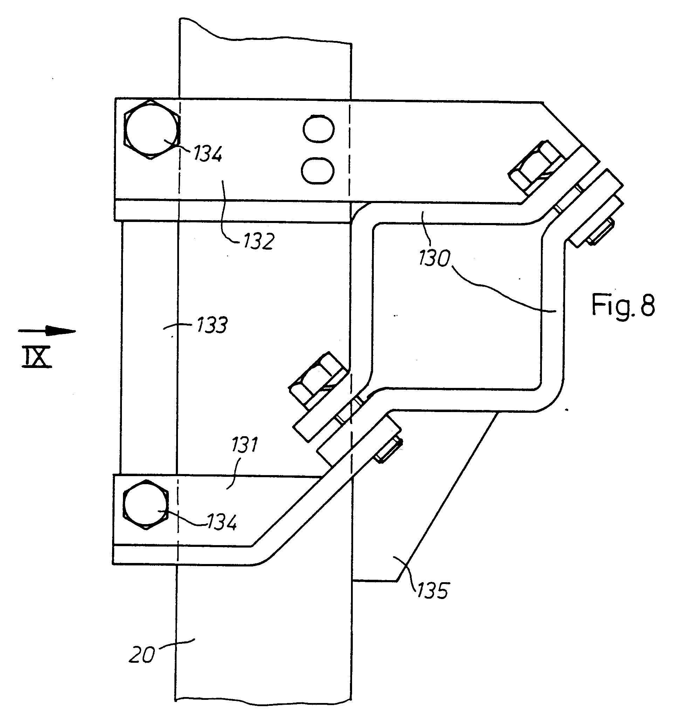

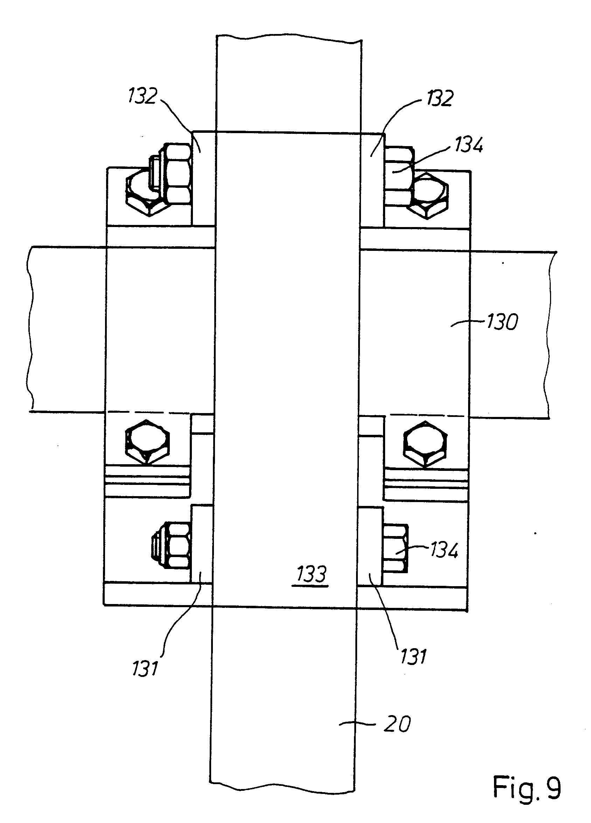

Zur Halterung der Haltestiele 20 der Lockerungswerkzeuge 19 kann bevorzugt die in den Figuren 8 und 9 dargestellte Anordnung dienen.

Der zur Halterung dienende Querbalken wird von zwei Winkelprofilen 130 umfaßt, die miteinander nach Art einer Klemmschelle verschraubt sind, wobei die Schrauben beidseitig des zu halternden Stieles 20 angeordnete lappenförmige Fortsätze der Winkelprofile 130 durchsetzen. An den Winkelprofilen 130 sind jeweils beidseitig des Stieles untere und obere Führungsleisten 131 und 132 angeschweißt, deren Abstand in Gerätequerrichtung den entsprechenden Querabmessungen des Haltestieles 20 entspricht.

Auf der vom Balken bzw. den Winkelprofilen 130 abgewandten Seite des Haltestieles 20 ist zwischen den Führungsleisten 131 und 132 ein stangenförmiges Teil 133 lösbar befestigt, beispielsweise mittels Schraubbolzen 134. Durch die Führungsleisten 131 und 132 sowie das stangenförmige Teil 133 und den von den Winkelprofilen 130 umfaßten Balken wird der Haltestiel 20 rohrförmig umschlossen, so daß derselbe nur vertikal verschoben werden kann. Die jeweilige Vertikallage kann durch Bolzen od.dgl. gesichert werden, welche in miteinander fluchtende Öffnungen in den oberen Führungsleisten 132 und im Haltestiel 20 eingeschoben werden. Zur besseren Abstützung des Haltestieles bei der Bodenarbeit kann am unteren Winkelprofil 130 noch ein nasenförmiger Fortsatz 135 angeschweißt sein, um dem Haltestiel 20 auf seiner in Geräterichtung nach rückwärts weisenden Seite auf einer großen vertikalen Länge abzustützen.

Der Austausch des Haltestieles 20 bzw. eines daran angeordneten Lockerungswerkzeuges 19 wird wesentlich dadurch erleichtert, daß das stangenförmige Teil 133 jeweils durch Lösen der Schraubbolzen 134 entfernt werden kann, so daß sich der Haltestiel 20 zwischen den Führungsleisten 131 und 132 in Fig. 8 nach links herausnehmen läßt. Dazu muß das Zinkenrotorgerät 102 nicht vertikal bewegt werden.

Gegebenenfalls genügt es, zur Demontage der Haltestiele 20 lediglich die unteren Schraubbolzen 134 zu lösen. Sodann kann der Haltestiel 20 zur Demontage um eine Gerätequerachse geschwenkt werden, wobei sich der in Fig. 8 untere Bereich des Haltestieles 20 nach links bewegt. Sodann läßt sich der Haltestiel 20 nach links schräg unten herausziehen, ohne das Zinkenrotorgerät 102 anheben zu müssen.

Die in Fig. 3 dargestellte Sämaschine weist unter anderem die Besonderheit auf, daß der zugehörige Tragrahmen eine hinreichende Stabilität besitzt, um die Sämaschine, wie oben dargelegt wurde, zwischen das Zinkenrotorgerät 102 und das Boden- bzw. Krümlerwalzengerät 104 einschalten zu können. In diesem Zusammenhang ist die Stabilität des Tragrahmens der Sämaschine 103 deshalb bedeutungsvoll, weil eine Gerätekombination, die ein Zinkenrotorgerät 102 sowie ein Boden- bzw. Krümlerwalzengerät 104 umfaßt, bei der Bodenarbeit in der Regel ausschließlich über die Walze auf den Boden abgestützt wird. Dementsprechend muß der das Zinkenrotorgerät 102 mit dem Boden- bzw. Krümlerwalzengerät 104 verbindende Tragrahmen der Sämaschine 103 erheblichen Belastungen standhalten.

Für den Fall, daß keine Sämaschine mit hinreichend stabilen Tragrahmen zur Verfügung steht, wird deshalb für eine aus Zinkenrotorgerät 102 und Boden- bzw. Krümlerwalzengerät 104 sowie Sämaschine 103 bestehende Kombination eine Anordnung entsprechend der Fig. 6 vorgesehen, wonach das Boden- bzw. Krümlerwalzengerät 104 über einen Zwischenrahmen 7 mit dem Rahmen des Zinkenrotorgerätes 102 verbunden ist, wie oben bereits beschrieben wurde.

Bei hinreichend stabilem Tragrahmen der Sämaschine 103 kann darüber hinaus auch eine hochschwenkbare Anordnung des Boden- bzw. Krümlerwalzengerätes 104 an den Sämaschinentragrahmen vorgesehen sein, und zwar in prinzipiell gleicher Weise, wie es oben für eine hochschwenkbare Anordnung des Krümlerwalzengerätes 104 am Zwischenrahmen 7 bei einer Anordnung gemäß den Figuren 6 und 7 mit Zwischenrahmen 7 zwischen Zinkenrotorgerät 102 und Boden- bzw. Krümlerwalzengerät 104 dargelegt wurde.

Unabhängig davon, ob das Boden- bzw. Krümlerwalzengerät 104 hochschwenkbar am Tragrahmen der Sämaschine 103 angeordnet ist oder nicht, wird am Tragrahmen der Sämaschine 103 bevorzugt vor der nachlaufenden Walze ein Vorhang 16 angeordnet, wie es bereits für eine Gerätekombination gemäß den Figuren 6 und 7 oben beschrieben wurde.

Eine weitere Besonderheit der Sämaschine besteht darin, daß die Saataustragsrohre 10 zur Vergrößerung des zwischen ihnen vorhandenen Durchtrittsquerschnittes für die Erde in Seitenansicht des Gerätes hintereinander versetzt in zumindest zwei Reihen angeordnet sind, wobei in Querrichtung des Gerätes aufeinanderfolgende Saatauslaufrohre abwechselnd in der einen oder anderen Reihe untergebracht sind. Die Erfindung nutzt dabei die Erkenntnis, daß ein hinreichend großer Durchtrittsquerschnitt zwischen den Saatauslaufrohren auch bei engem Strichabstand derselben in Gerätequerrichtung dadurch herstellbar ist, daß in Querrichtung eng benachbarte Saatauslaufrohre mit größerem Abstand in Gerätelängsrichtung angeordnet wind.

Vorzugsweise sind die Saataustragsrohre 10 am Tragrahmen der Sämaschine 103 gehalten, jedoch ist es grundsätzlich auch möglich, die Saataustragsrohre 10 an anderen Teilen des Gerätesystems, beispielsweise an dem Zwischenrahmen 7 zwischen dem Zinkenrotorgerät 102 und dem Boden- bzw. Krümlerwalzengerät 104 zu haltern.

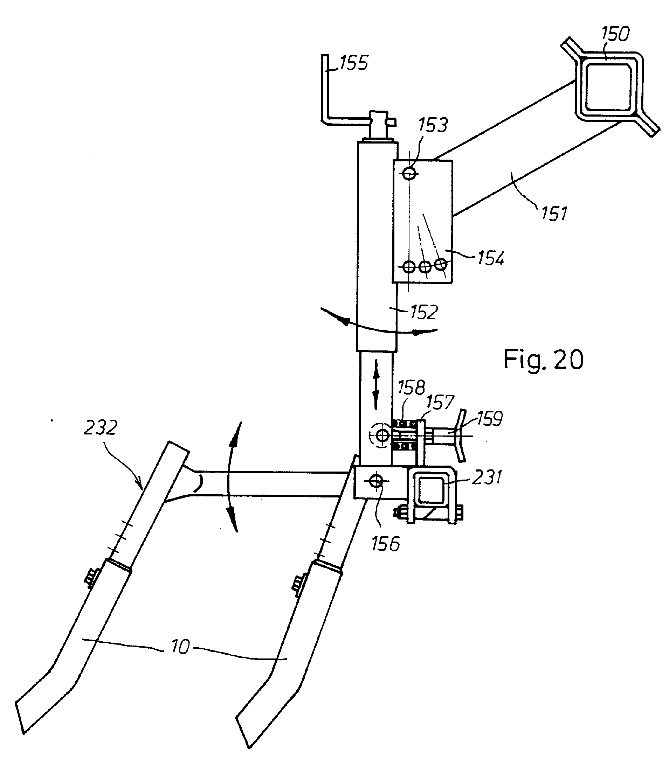

Die Ausbildung der Saataustragsrohre 10 sowie deren Halterung ist aus den Figuren 20 bis 22 genauer ersichtlich.

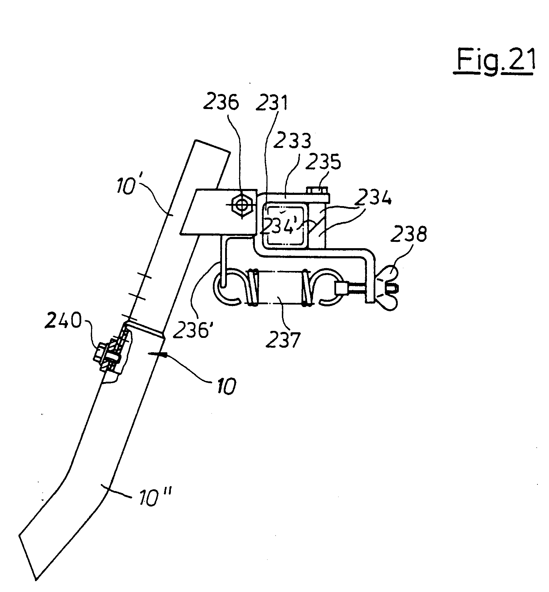

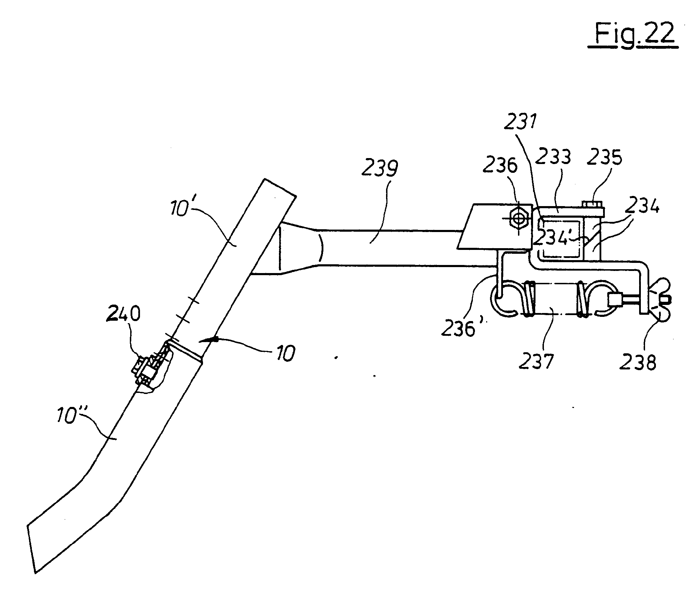

Am Querbalken 231 sind U-Bügel 233 angeordnet, welche den Querbalken 231 auf drei Seiten umfassen. Auf der vom Mittelbereich des U-Bügels 233 abgewandten Seite des Querbalkens 231 sind an den U-Schenkeln des Bügels 233 einander gegenüberliegende Klemmstücke 234 angeordnet, welche mit Schrägflächen 234' aufeinander aufliegen und so angeordnet sind, daß sie am Querbalken 231 anliegen. Mittels Schraubbolzen 235 können die U-Schenkel des Bügels 233 sowie die Klemmstücke 234 gegeneinander verspannt werden, wobei sich jeweils ein Klemmstück 234 (in den Figuren 21 und 22 das jeweils obere Klemmstück 234) gegenüber dem anderen Klemmstück 234 gegen den Querbalken 231 verschiebt. Dies beruht darauf, daß die Schrägflächen 234' in Gerätelängsrichtung gegenüber einer Horizontalebene geneigt sind und dementsprechend die gegeneinander gespannten Klemmstücke 234 beim Aufgleiten der Schrägflächen 234' aufeinander in Gerätelängsrichtung nach vorwärts bzw. rückwärts verschoben werden. Durch den Andruck des jeweils einen (oberen) Klemmstückes 234 an den Querbalken 231 wird ein besonders sicherer Sitz der U-Bügel 233 am Querbalken 231 gewährleistet.

Auf den von den Klemmstücken 234 abgewandten Seiten der U-Bügel 233 sind die Saataustragsrohre 10 mittels scharnierartiger Gelenke 236 schwenkbar gehaltert, welche in Gerätequerrichtung verlaufende Gelenkachsen aufweisen. An den den Saataustragsrohren 10 zugeordneten Gelenkteilen sind nach unten abstehende laschenförmige Fortsätze 236' angeordnet, die als bewegliches Widerlager einer Schraubenzugfeder 237 dienen, deren anderes Ende an einer nach unten abgewinkelten Verlängerung des einen U-Schenkels der Bügel 233 befestigt sind. Dabei kann mittels Stellschrauben 238 die Spannung der Schraubenzugfedern 237 eingestellt werden.

Um die in Fig. 2, aber auch in den Figuren 6, 23 und 24 dargestellte Anordnung der Saataustragsrohre 10 in zwei Reihen hintereinander am gleichen Querbalken 231 zu ermöglichen, ist bei den in Fahrtrichtung hinteren Saataustragsrohren 232 jeweils ein Haltearm 239 am saatrohrseitigen Gelenkteil angeordnet. Gegebenenfalls kann der Haltearm 239 teleskopartig verstellbar ausgebildet sein, um den Schrittabstand zwischen den in Fahrtrichtung vorderen und den in Fahrtrichtung hinteren Saataustragsrohren 232 variieren zu können. Durch die bereits erwähnte Einstellbarkeit der Spannung der Schraubenzugfedern 237 wird gewährleistet, daß auf die unteren Enden sowohl der in Fahrtrichtung vorderen als auch der in Fahrtrichtung hinteren Saataustragsrohre 232 vergleichbare Kräfte einwirken müssen, um die Saataustragsrohre 232 gegen die Kraft der Federn 237 in den Figuren 21 und 22 im Uhrzeigersinne auszulenken.

Der die Saataustragsrohre 10 tragende Querbalken 231 ist bevorzugt in der aus Fig. 20 ersichtlichen Weise an einem Querbalken des Tragrahmens der Sämaschine 103 oder eines anderen Teiles des Gerätesystems gehaltert. An dem Querbalken 150 bzw. daran angeordneten, in Gerätelängsrichtung, in der Regel nach hinten gerichteten Armen 151, sind Spindelaggregate 152 od.dgl. um eine Gerätequerachse 153 schwenkbar angeordnet. Die jeweilige Schwenklage der Spindelaggregate kann festgelegt werden, indem Bolzen od.dgl. in miteinander korrespondierende Öffnungen von Lochscheiben 154 eingesetzt werden, welche einerseits fest am jeweiligen Spindelaggregat 152 od.dgl. und andererseits fest am jeweiligen Arm 151 bzw. am Querbalken 150 angeordnet sind.

Durch Betätigung der Kurbel 155 kann das untere Ende jedes Spindelaggregates 152 mehr oder weniger weit teleskopartig ausgefahren werden. An den unteren Enden der Spindelaggregate 152 ist der Querbalken 231 um eine Querachse 156 schwenkbar gelagert, beispielsweise mittels einer scharnierartigen, durch Flachteile gebildeten Gelenkanordnung. Um die jeweilige Schwenklage einstellen zu können, ist eine entsprechende Verstelleinrichtung vorgesehen.

Im Beispiel der Fig. 20 ist dazu zwischen einem am Querbalken 231 angeordneten flachbandartigen Arm 157 und dem unteren, höhenverstellbaren Teil des Spindelaggregates 152 eine Schraubendruckfeder 158 eingespannt, welche den flachbandartigen Arm 157 gegen eine mit Handgriff versehene Mutter 159 spannt, die auf einem gelenkig mit dem unteren Teil des jeweiligen Spindelaggregates 152 verbundenen, eine Öffnung im flachbandartigen Arm 157 durchsetzenden Gewindeteil schraubverschiebbar angeordnet ist.

Durch Verschwenkung der Spindelaggregate 152 können der Querbalken 231 und damit die Saataustragsrohre 10 in Gerätelängsrichtung nach hinten oder vorn verschoben werden. Mittels der Kurbeln 155 der Spindelaggregate 152 kann die Höhenlage der Saataustragsrohre 232 schnell verändert werden. Durch Verstellung der Muttern 159 wird die Möglichkeit geschaffen, die in Fahrtrichtung hinteren Saataustragsrohre 232 (in Fig. 20 die linken Saataustragsrohre) relativ zu den vorderen Saataustragsrohren 232 in der Höhe zu verstellen. Auf diese Weise läßt sich unter allen Umständen gewährleisten, daß das aus den vorderen und hinteren Saataustragsrohren 232 austretende Saatgut gleichmäßig mit Erde bedeckt wird, insbesondere wenn vor den Saataustragsrohren 232 das Zinkenrotorgerät 102 arbeitet. Eine Anpassung an die Form des vom Zinkenrotor nach hinten geworfenen Erdstromes, welcher zwischen den Saataustragsrohren 232 hindurchläuft, ist also in jeder Weise möglich.

Sollten die Saataustragsrohre 10 bei eventueller Rückwärtsfahrt des Zugfahrzeuges bzw. Traktors Bodenberührung erhalten, so wird durch die Schraubendruckfedern 158 eine größere Nachgiebigkeit gewährleistet, d.h. Defekte können in der Regel vermieden werden.

Grundsätzlich können für die Verstellung des Querbalkens 231 in Gerätelängsrichtung und Vertikalrichtung auch andere Organe angeordnet sein. Die Anordnung nach Fig. 20 zeichnet sich jedoch durch besonders einfache Bedienbarkeit aus.

Die Saataustragsrohre 10 sind zweiteilig ausgebildet, wobei jeweils ein oberes Rohrstück 10' schwenkbar an den U-Bügeln 233 gehaltert ist. Das jeweils untere Rohrstück 10'' ist auf dem oberen Rohrstück 10' teleskopartig verschiebbar angeordnet und kann mittels Feststellschrauben 240 am oberen Rohrstück 10' fixiert werden. Damit ist einerseits eine Höheneinstellung der unteren Enden der Saataustragsrohre 10 möglich, andererseits können gegebenenfalls untere Rohrstücke 10'' mit unterschiedlicher Form bzw. auf die oberen Rohrstücke 10' passende Säschare angeordnet werden.

Bei den dargestellten Ausführungsformen sind die Saataustragsrohre 10 jeweils einfach angeordnet. Grundsätzlich sind auch Doppelrohranordnungen möglich, wobei jeweils ein Rohr zum Austrag des Saatgutes und das andere Rohr zum Austrag von Düngemitteln u.dgl. dienen können. Um zu vermeiden, daß an den doppelrohrförmig ausgebildeten Austragsrohren strähniges Pflanzengut od.dgl. hängenbleiben kann, ist jeweils das eine Rohrteil des Doppelrohres in Fahrtrichtung hinter dem anderen Rohrteil angeordnet.

## Patentansprüche

1. Gerätesystem für die landwirtschaftliche Bodenbearbeitung mit an ein Zugfahrzeug, z.B. einen Traktor, mittels Hub- bzw. Dreipunktgestänges (111) vertikal beweglich ankoppelbarem Rahmenaggregat für verschiedenartig kombinierbares Bodenbearbeitungsgerät, wie zapfwellengetriebenes Zinkenrotorgerät (102) od.dgl. Geräte, welche einen ähnlichen Erdstrom erzeugen, der hinter dem Zinkenrotor durch dort angeordnete Mittel zum Boden geleitet wird, und Sämaschine (103), welche hinter dem Zinkenrotorgerät (102) od.dgl. anbringbare und in den vom Zinkenrotorgerät (102) od.dgl. aufgeworfenen Erdstrom hineinragende, höhenverstellbare Saataustragsrohre (10) besitzt, und Boden- bzw. Krümlerwalzengerät (104) und Scharwerkzeuge (19) od.dgl., die am Rahmen des Zinkenrotorgerätes (102) vor dem Zinkenrotor höhenverstellbar anbringbar sind, wobei am Rahmen des Zinkenrotorgerätes (102) od.dgl. ein an das Hub- bzw. Dreipunktgestänge (111) ankoppelbarer bockartiger Rahmenteil (110) fest angeordnet ist und das Boden- bzw. Krümlerwalzengerät (104) einen gesonderten Rahmen besitzt, welcher nach Art einer Schwinge um eine Querachse schwenkverstellbar an gesonderte Anschlußpunkte (107,109) des Rahmens des Zinkenrotorgerätes (102) od.dgl. anschließbar ist, dadurch gekennzeichnet,
– daß auch am Rahmen eines separaten Fahrwerkes (101) mit Stützrädern ein an das Hub- bzw. Dreipunktgestänge (111) ankoppelbarer bockartiger Rahmenteil (110) fest angeordnet ist,
– daß auf der vom Hub- bzw. Dreipunktgestänge (111) abgewandten Heckseite der bockartigen Rahmenteile (110) von Zinkenrotorgerät (102) od.dgl. und Fahrwerk (101)
– als Teil des bockartigen Rahmenteiles (110) oder damit fest verbunden - ein Stützrahmen (105) angeordnet ist, welcher mit passenden Aufnahmeteilen (113) eines Tragrahmens der Sämaschine (103) koppelbar ist, indem der Stützrahmen (105) von unten in die Aufnahmeteile (113) eingeführt bzw. der Tragrahmen der Sämaschine (103) von oben auf den Stützrahmen (105) abgesenkt und mittels einer spielfreien Verriegelung in allen Richtungen relativ zum Stützrahmen (105) arretiert wird,
– daß am Tragrahmen der Sämaschine (103) gleichartige gesonderte Anschlußpunkte (107,109) wie am Rahmen des Zinkenrotorgerätes (102) od.dgl. für den gesonderten Rahmen des Boden- bzw. Krümlerwalzengerätes (104) angeordnet sind,
– daß die Saataustragsrohre (10) in zumindest zwei Reihen hintereinander anbringbar sind, wobei in Querrichtung aufeinanderfolgende Saataustragsrohre (10) abwechselnd der einen und der anderen Reihe zugeordnet sind,
– daß hinter den Saataustragsrohren (10) - vor dem gegebenenfalls angeschlossenen Boden- bzw. Krümlerwalzengerät (104) - ein mattenartiger Vorhang (16) quer anbringbar ist, welcher den Erdstrom zum Boden leitet, und
– daß die Scharwerkzeuge (19) od.dgl. auch am Fahrwerksrahmen (101) anbringbar sind.

2. Gerätesystem nach Anspruch 1, dadurch gekennzeichnet, daß das Boden- bzw. Krümlerwalzengerät

EP 0 359 741 B1

(104) an einem Zwischenrahmen (7) anbringbar ist, welcher den Rahmen des Zinkenrotorgerätes (102) od.dgl., auf das eine Sämaschine (103) aufgesattelt bzw. aufsattelbar ist, nach rückwärts plattformartig verlängert.

3. Gerätesystem nach einem der Ansprüche 1 oder 2, dadurch gekennzeichnet, daß das Boden- bzw. Krümlerwalzengerät (104) zumindest im Austausch gegen das Achsaggregat der Stützräder auch am Rahmen des Fahrwerkes (101) ankoppelbar ist.

4. Gerätesystem nach einem der Ansprüche 1 bis 3, dadurch gekennzeichnet, daß die Räder des Fahrwerkes (101) an einem Achsaggregat (241,242,243) gehaltert sind, welches am Rahmen des Fahrgestells (101) nach Art einer Längsschwinge um eine Querachse (245)schwenkbar anbringbar und durch ein Stützenteil, z.B. ein Spindelaggregat (244), höheneinstellbar abgestützt ist, welches zwischen dem Achsaggregat und dem Rahmen des Fahrgestells (101) entfernt von der Querachse(245) einsetzbar ist.

5. Gerätesystem nach Anspruch 4, dadurch gekennzeichnet, daß der nach Art einer Längsschwinge ausgebildete Rahmen des Boden- bzw. Krümlerwalzengerätes (104) an den für das Achsaggregat (241,242,243) vorgesehenen Anschlußteilen um die gleiche Querachse(245) schwenkbar am Rahmen des Fahrgestells (101) anbringbar und mittels des gleichen bzw. eines gleichartigen Abstützteiles (Spindel 244) abstützbar ist.

6. Gerätesystem nach einem der Ansprüche 1 bis 5, dadurch gekennzeichnet, daß am Fahrwerk (101) eine durch Zapfwelle (111) antreibbare Riemenscheibe (118) od.dgl. zum Antrieb einer auf das Fahrwerk (101) aufsattelbaren Sämaschine (103) od.dgl. angeordnet ist.

7. Gerätesystem für die landwirtschaftliche Bodenbearbeitung nach einem der Ansprüche 1 bis 6, dadurch gekennzeichnet, daß der Rahmen eines Boden- bzw. Krümlerwalzengerätes (104) um eine Querachse schwenkbar an einem Querbalken (91) angeordnet ist, welcher seinerseits um eine Querachse schwenkbar an einem Zwischenrahmen (7) bzw. einem Rahmen eines davor angeordneten Gerätes (Zinkenrotorgerät 102, Sämaschine 103) angeordnet ist, daß der Querbalken (91) mittels zugeordneter Antriebsbzw. Kolben-Zylinder-Aggregate (92) zwischen einer Endlage für eine in die Arbeitslage herabgeklappte Walze (17) und einer Endlage für eine in eine Transportlage hochgeklappte Walze (17) verstellbar ist, und daß der Rahmen des Boden- bzw. Krümlerwalzengerätes (104) relativ zum Querbalken (91) mittels eines separaten Stellorgans (30) einstellbar ist.

8. Gerätesystem nach Anspruch 7, dadurch gekennzeichnet, daß das gesonderte Einstellorgan (30) ein Spiel freizugeben gestattet und/oder als weiteres Kolben-Zylinder-Aggregat ausgebildet ist, welches den Rahmen des Boden- bzw. Krümlerwalzengerätes (104) relativ zum Querbalken (91) zwischen zwei Endlagen zu schwenken gestattet.

9. Gerätesystem für die landwirtschaftliche Bodenbearbeitung mit einem Zinkenrotor (14) nach einem der Ansprüche 1 bis 8, dadurch gekennzeichnet, daß die Rotorzinken (60) an der Rotorwelle (61) bzw. -achse angeordnete Haltearme (62) sowie daran austauschbar gehalterte Zinkenendstücke (63) besitzen, welche mit den Haltearmen (62) einen in Umlaufrichtung geöffneten stumpfen Winkel bilden, so daß die Längsachsen der Zinkenendstücke (63) tangential zur Rotorachse und mit Abstand von derselben erstreckt sind, daß jedes Zinkenendstück (63) mit einem zapfenartigen Einsteckteil (65) in eine entsprechende Aufnahmebohrung (64) des Haltearmes (62) unter Verspannung in Längsrichtung eingesteckt ist, daß das Zinkenendstück (63) an einem an das Einsteckteil (65) anschließenden Bereich des Zinkenendstückes (63) auf der entgegen der Umlaufrichtung weisenden Seite durch einen am Haltearm (62) angeformten Wulst (69) abgestützt ist, und daß die aufeinander aufliegenden flächen von Wulst (69) und Zwischenstück als Schräg- bzw. Keilflächen (67,68) ausgebildet sind, die bei Verspannung des Zinkenendstückes (63) zunehmend verkeilt werden.

10. Gerätesystem nach Anspruch 9, dadurch gekennzeichnet, daß prismatisch angeordnete Schrägflächen (67,68) vorgesehen sind.

11. Gerätesystem für die landwirtschaftliche Bodenbearbeitung mit Zinkenrotor nach einem der Ansprüche 1 bis 10, dadurch gekennzeichnet, daß an den freien Enden jedes Zinkenendstückes (63) ein Mulchscharblatt (71) derart angeordnet ist, daß erfaßte Erde zur Rotorachse (61) hin angehoben wird (Anschnittwirkung), daß die Vorderkante des Scharblattes (71) in Umlaufrichtung über die in Umlaufrichtung weisende Vorderseite des Zinkenendstückes (63) bzw. über eine zur Rotorachse parallele und die genannte Vorderseite enthaltende Ebene hinausragt, und daß der rückwärts gerichtete Rand des Scharblattes (71) in Umlaufrichtung vor bzw. in einer Ebene liegt, die parallel zur Rotorachse erstreckt ist und tangential auf der entgegen der Umlaufrichtung weisenden Seite des Endstückes (63) aufliegt.

12. Gerätesystem für die landwirtschaftliche Bodenbearbeitung mit einem Zinkenrotor nach einem der Ansprüche 1 bis 11, dadurch gekennzeichnet, daß der Zinkenrotor (14) aus mehreren in Achsrichtung aneinander anschließenden Abschnitten mit dazwischen angeordneten Zwischenlagern (24) besteht, wobei zwischen Endflanschen (25) der Abschnitte zwei an die Endflansche anflanschbare und miteinander verbundene Kreisscheiben (26) angeordnet sind, die zwischen sich eine Umfangsnut begrenzen, in der ein Radiallager (27) untergebracht ist, dessen äußere Lagerschale innerhalb eines teilbaren Halteteiles (28) am Geräterahmen festlegbar ist.

13

13. Gerätesystem nach einem der Ansprüche 1 bis 12, dadurch gekennzeichnet, daß hinter dem Zinkenrotor (14) an eine obere Rotorverkleidung anschließende, um eine Querachse schwenkverstellbare Klappe (15) angeordnet ist, welche den Freiraum für die vom Rotor (14) nach hinten geworfene Erde nach oben begrenzt.

14. Gerätesystem nach Anspruch 13, dadurch gekennzeichnet, daß am freien Rand der Klappe (15) eine dieselbe fortsetzende flexible matte (80) angeordnet ist, welche vorzugsweise größenordnungsmäßig etwa gleiche Abmessungen wie die Klappe (15) hat.

15. Gerätesystem für die landwirtschaftliche Bodenbearbeitung mit Lockerungs- bzw. Scharwerkzeugen nach einem der Ansprüche 1 bis 14, dadurch gekennzeichnet, daß die vorzugsweise vor einem Zinkenrotor (14) od.dgl. angeordneten Lockerungswerkzeuge (19) jeweils an der Vorderseite des unteren Endes eines Haltestieles (20) einen in Seitenansicht dreiecksartigen Fortsatz (21) mit nach vorn weisender Spitze bzw. Ecke aufweisen, auf dem das Lockerungswerkzeug (19) nach Art eines Schuhes austauschbar gehalten ist, wobei das Lockerungswerkzeug (19) ein längs des unteren Randes des dreiecksförmigen Fortsatzes (21) angeordnetes meißelartiges Teil (22) sowie ein vor der Vorderkante des Fortsatzes (21) angeordnetes, auf der Vorderkante aufliegendes leistenartiges Teil (23) mit nach vorn weisendem Keilprofil aufweist, und wobei beidseitig des Fortsatzes (21) dreiecksartige Platten (29) an ihren unteren und vorderen Rändern mit den meißelartigen sowie leistenartigen Teilen (22,23) verbunden sind, und daß zur Halterung des Lockerungswerkzeuges (19) ein Exzenter (85) dient, der in einander überdeckende Querbohrungen der dreiecksartigen Platten (29) sowie des Haltestieles (20) bzw. eines damit verbundenen Teiles einsetzbar ist.

16. Gerätesystem nach Anspruch 15, dadurch gekennzeichnet, daß die Haltestiele (20) in Richtung des dahinter arbeitenden Zinkenrotors (14) abgebogen sind, derart, daß das Lockerungswerkzeug (19) unmittelbar vor dem Zinkenrotor (14) od.dgl. arbeitet.

17. Gerätesystem nach einem der Ansprüche 1 bis 16, dadurch gekennzeichnet, daß die Schar- bzw. Lok-kerungswerkzeuge (19) mit ihren Haltestielen (20) höhenverstellbar in die Stiele (20) ringförmig umschließenden Halterungen angeordnet sind, die sich seitlich öffnen lassen, derart, daß die Stiele (20) quer zu ihrer Achse aus den Halterungen herausnehmbar sind.

18. Gerätesystem nach einem der Ansprüche 1 bis 17, dadurch gekennzeichnet, daß die Saataustragsrohre (10) teleskopartig ausgebildet sind, wobei jeweils ein unteres Endstück (10″) auf oder in einem oberen Teilstück (10′) des jeweiligen Saataustragsrohres (10) in unterschiedlich verschobenen Lagen festlegbar ist.

19. Gerätesystem nach einem der Ansprüche 1 bis 18, dadurch gekennzeichnet, daß die - vorzugsweise in Gerätelängsrichtung schwenkbaren - Saataustragsrohre (10) an einem Querbalken (231) mittels in Querrichtung einstellbarer, schellenartiger Halterungen (233,234) angebracht sind, die den Querbalken mit einem U-Bügel (233) U-förmig umfassen, daß auf der vom Mittelstück des U-Bügels (233) abgewandten Seite des Querbalkens (231) zwischen den Schenkeln des U-Bügels (233) Klemmstücke (234) angeordnet sind, welche mit Schrägflächen (234′) derart aufeinander aufliegen, daß jeweils ein Klemmstück bei Verspannung der U-Schenkel gegeneinander gegen den Balken (231) gedrängt wird.

20. Gerätesystem nach einem der Ansprüche 1 bis 19, dadurch gekennzeichnet, daß die Saataustragsrohre (10) hintereinander gemeinsam an einem Rahmen oder - vorzugsweise - an einem Querbalken (231) gehaltert sind, der vertikal und/oder in Gerätelängsrichtung und/oder unter Schwenkung um seine Achse verstellbar ist.

21. Gerätesystem nach einem der Ansprüche 1 bis 20, dadurch gekennzeichnet, daß ein mit der Zapfwelle (111) verbindbares Getriebe des Zinkenrotorgerätes (102) od.dgl. einen zusätzlichen Abtrieb für eine Riemenscheibe (118) od.dgl. zum Antrieb einer auf das Zinkenrotorgerät (102) od.dgl. aufsattelbaren Sämaschine (103) od.dgl. besitzt.

## Claims

1. An equipment system for agricultural ground preparation having a frame unit which can be vertically movably coupled by means of a lifting linkage or three-point linkage (111) to a traction vehicle, such as a tractor, the frame unit being provided for variably combinable ground preparation equipment such as a power take-off shaft driven tined rotor device (102), or like devices which generate a similar stream of earth which is directed behind the tined rotor through means disposed there to the ground, and a sowing machine (103) which has vertically adjustable seed delivery tubes (10) which can be mounted behind the tined rotor device (102) or the like and which project into the stream of earth thrown up by the tined rotor device (102) or the like, and a ground roller or roller tiller device (104) and plough tools (19) or the like which can be vertically adjustably mounted on the frame of the tined rotor device (102) in front of the tined rotor, with a trestle-like frame part (110) which can be coupled onto the lifting linkage or three-point linkage (111) being fixedly arranged on the frame of the tined rotor device (102) or the like and wherein the ground roller or roller tiller (104) has a separate frame which can be pivotally adjustably mounted in the manner of a hinge about a transverse axis to special connection points (107, 109) of the frame of the tined rotor device (102) or the like, characterised in that

- a trestle-type frame part (110) which can be coupled to the lifting linkage or three-point linkage (111) is also fixedly arranged on the frame of a separate chassis (101) with supporting wheels,
- in that a supporting frame (105) is arranged at the rear side remote from the lifting or three-point linkage (110) of the trestle-like frame parts (110) of the tined rotor device (102) or the like and of the chassis (101) - as part of the trestle-like frame part (110) or firmly connected with it -, wherein the supporting frame (105) can be coupled to matching receiving parts (113) of a carrying frame of the sowing machine (103) by inserting the supporting frame (105) from below into the receiving parts (113) or by lowering the carrying frame for the sowing machine (103) from above onto the supporting frame (105) and locking it relative to the supporting frame (105) in all directions by means of a play-free locking device,
- in that identical separate connecting points (107, 109) as on the frame of the tined rotor device (102) or the like are arranged on the carrying frame of the sowing machine (103) for the separate frame of the ground roller or roller tiller (104),
- in that the seed delivery tubes (10) can be mounted behind one another with seed tubes which follow one another in the transverse direction being alternately assigned to the one or other row,
- in that a mat type curtain (16) can be mounted transversely behind the seed delivery tubes - in front of the optionally connected ground roller or roller tiller (104) - and directs the stream of soil to the ground, and
- in that the plough tools or the like can also be mounted on the chassis frame (101).

2. An equipment system according to claim 1, characterised in that the ground roller or roller tiller (104) can be mounted on an intermediate frame (7) which rearwardly extends in platform-like manner the frame of the tined rotor (102) or the like onto which a sowing machine (103) is mounted or can be mounted.

3. An equipment system according to one of claims 1 or 2, characterised in that the ground roller or roller tiller (104) can also be coupled to the frame of the chassis (101), at least in exchange for the axle unit of the supporting wheels.

4. An equipment system according to one of claims 1 to 3, characterised in that the wheels of the chassis (101) are held at an axle unit (241, 242, 243) which is pivotably mountable at the frame of the chassis (101) in the manner of a longitudinal rocker device about a transverse axis (245) and is vertically adjustably supported by a support part, such as a spindle unit (44), which can be inserted between the axle unit and the frame of the chassis (101) away from the transverse axis (245).

5. An equipment system according to claim 4, characterised in that the frame of the ground roller or roller tiller (104) which is constructed in the manner of a longitudinal rocker device, can be pivotally mounted on the frame of the chassis (101) at the connecting parts provided for the axle unit (241, 242, 243) about the same transverse axis (245), and can be supported by means of the same or a similar supporting part (spindle 244).

6. An equipment system according to one of the claims 1 to 5, characterised in that a belt pulley (118) or the like, which can be driven by the power take-off shaft (111) is provided at the chassis (101) for the drive of a sowing machine (103) or the like which can be mounted on the chassis (101).

7. An equipment system for agricultural ground preparation according to one of the claims 1 to 6, characterised in that the frame of a ground roller or roller tiller (104) is arranged on a transverse beam (91) and is pivotable about a transverse axis, and the transverse beam (91) is, in turn, pivotably arranged about a transverse axis on an intermediate frame (7) or on a frame of a device (tined rotor (102), sowing machine (103)) arranged in front of it; in that the transverse beam can be adjusted between an end position for a roller (17) swung down into the working position and an end position for a roller (17) swung up into a transport position, by means of associated driving units or piston-in-cylinder units (92); and in that the frame of the ground roller or roller tiller (104) can be adjusted relative to the transverse beam (91) by means of a separate positioning member (30).

8. An equipment system according to claim 7, characterised in that the separate positioning member (30) permits a clearance to be freed and/or is constructed as a further piston-in-cylinder unit which makes it possible to swivel the frame of the ground roller or roller tiller (104) relative to the transverse beam (91) between two end positions.

9. An equipment system for agricultural ground preparation having a tined rotor (14) according to one of the claims 1 to 8, characterised in that the rotor tines (60) have holding arms (62) mounted on the rotor shaft (61) or axis as well as tine end pieces (63) which are interchangeably held on these holding arms (62), and form, together with the holding arms (62), an obtuse angle which is open in the direction of rotation, so that the longitudinal axes of the tine end pieces (63) extend tangentially to the rotor axis and at a distance from it, in that each tine end piece (63), is plugged by means of a spigot-like insert piece (65) into a corresponding receiving bore (64) of the holding arm (62) and is clamped in the longitudinal direction, in that the tine end piece (63) is supported at an area of the tine end piece (63) which adjoins the insert piece (65), at the side opposite to the direction of rotation by a bead (69) formed on the holding arm (62), and in that the surfaces of the bead (69) and of the transition piece, which rest on one another, are constructed as slanted or wedge surfaces (67, 68) which, when the tine end piece (63) is clamped, are increasingly wedged.

10. An equipment system according to claim 9, characterised in that prismatically arranged slanted surfaces (67, 68) are provided.

11. An equipment system for agricultural ground preparation having a tined rotor according to one of the claims 1 to 10, characterised in that a mulching plough blade (71) is arranged at the free ends of each tine end piece (63) in such a manner that the engaged soil is lifted in the direction towards the rotor shaft (61) (first cut effect); in that the front edge of the plough blade (71) projects in the direction of rotation beyond the front side of the tine end piece (63) pointing in the direction of rotation, or beyond a plane which is parallel to the rotor shaft and contains the said front side; and in that the rearwardly directed edge of the plough blade (71), in the direction of rotation, is located in front of or in a plane which extends parallel to the rotor shaft and tangentially contacts the side of the end piece (63) facing away from the direction of rotation.

12. An equipment system for agricultural ground preparation having a tined rotor according to one of claims 1 to 11, characterised in that the tined rotor (14) consists of several sections which follow one another in the axial direction with intermediate bearings (24) arranged between them, wherein two circular disks, which are connected to one another, are arranged between end flanges (25) of the sections and can be flanged onto the end flanges, the circular disks (26) bounding a circumferential groove between them, in which a radial bearing (27) is housed, the outer bearing shell of which is fixable inside a separable holding part (28) at the device frame.

13. An equipment system according to one of claims 1 to 12, characterised in that a flap (15) which follows an upper rotor casing and can be pivotably adjusted around a transverse axis is arranged behind the tined rotor (14) and upwardly bounds the free space for the earth thrown backwards by the rotor (14).

14. An equipment system according to claim 13, characterised in that, at the free end of the flap (15) there is arranged a flexible mat (80) forming a continuation of the same, the flexible mat (80) preferably having approximately the same dimensions as the flap (15) with respect to the order of magnitude of its size.

15. An equipment system for agricultural ground preparation having loosening or plough tools according to one of the claims 1 to 14, characterised in that the loosening tools (19) which are preferably arranged in front of a tined rotor (14) or the like have, in each case, at the front side of the lower end of a holding stem (20), an extension (21) which is triangular in side view and which has a forwardly directed point or corner, on which the loosening tool (19) is exchangeably held in the manner of a shoe, the loosening tool (19) having a chisel-like part (22) arranged along the lower edge of the triangular extension (21) and having a strip-like part (23) which is arranged in front of the front edge of the extension (21), which rests on the front edge, and has a forwardly directed wedge profile, and wherein triangular plates (19) are connected on both sides of the extension (21) at their lower and front edges with the chisel-like and strip-like parts (22, 23); and in that an eccentric device (85) is used for the holding of the loosening tools (19) and can be inserted into mutually overlapping transverse bores of the triangular plates (29) as well as of the holding stem (20) or of a part connected to it.

16. An equipment system according to claim 15, characterised in that the holding stems (20) are bent down in the direction of the tined rotor (14) operating behind them in such a way that the loosening tool (19) operates directly in front of the tined rotor (14) or the like.

17. An equipment system according to one of the claims 1 to 16, characterised in that the plough or loosening tools (19) are arranged with their holding stems vertically adjustably disposed in holding devices which surround the stems (20) in a ring-like manner and which can be laterally opened in such a manner that the stems (20) can be taken out of the holding devices transversely to their axes.

18. An equipment system according to one of the claims 1 to 17, characterised in that the seed delivery tubes (10) are constructed in the manner of a telescope, with a lower end piece (10″), being in each case fixable on or in an upper segment (10′) of the respective seed delivery tube (10) in differently shifted positions.

19. An equipment system according to one of the claims 1 to 18, characterised in that the seed delivery tubes (10) - which preferably can be swivelled in the longitudinal direction of the machine - are mounted at a transverse bar (231) by means of clip-type holders (233, 234 which can be adjusted in the transverse direction and which engage with a stirrup (233) in a U-shaped manner around the transverse bar; in that clamping pieces (234) are arranged on the side of the transverse bar (231) facing away from the center piece of the stirrup (233) between the legs of the stirrup (233), the clamping pieces (234) contacting one another by means of slanted surfaces (234′) in such a way that in each case, one clamping piece is urged against the bar (231) when the U-legs are braced against one another.

20. An equipment system according to one of the claims 1 to 19, characterised in that the seed delivery tubes (10) are held behind one another jointly at a frame or - preferably - at a transverse bar (231), which can be adjusted vertically and/or in longitudinal direction of the machine and/or with swivelling around its axis.

21. An equipment system according to one of the claims 1 to 20, characterised in that a transmission of tined rotor device (102), or the like, which can be connected with the power take-off shaft (111), has an additional power take-off for a pulley (118) or the like for driving a sowing machine (103) or the like which can be mounted on the tined rotor (102) or the like.


**Revendications**

1. Système d'appareils pour le travail du sol en agriculture, comprenant un ensemble de cadre accouplé à un véhicule tracteur, p.ex. un tracteur agricole, au moyen d'un embiellage (111) de levage ou embiellage à trois points de façon à se déplacer verticalement, ledit ensemble de cadre étant destiné à des appareils de travail du sol qui peuvent être combinés de différentes manières, comme un appareil à rotor denté (102) entraîné par une broche d'arbre, ou des appareils similaires qui produisent un écoulement de terre semblable qui est ramené au sol en arrière du rotor denté au moyen de dispositifs agencés à cet endroit, comme une machine à semer (103) qui comporte des tubes (10) d'alimentation en semences, réglables en hauteur, qui peuvent être montés en arrière de l'appareil à rotor denté (102) ou similaire et se projettent dans l'écoulement de terre rejeté par l'appareil à rotor denté (102) ou similaire, et comme un appareil à rouleau d'émottage (104) et des outils de labourage (19) ou similaires, qui peuvent être montés sur le cadre de l'appareil à rotor denté (102) en avant du rotor denté de manière à pouvoir être réglés en hauteur, dans lequel une partie de cadre (110) qui peut être accouplée à l'embiellage (111) de levage ou à trois points est montée fixement sur le cadre de l'appareil à rotor denté (102) ou similaire, et dans lequel l'appareil à rouleau d'émottage (104) possède un cadre particulier qui peut être attaché à des points d'attache spéciaux (107, 109) du cadre de l'appareil à rotor denté (102) ou similaire de manière à pouvoir être réglé en rotation autour d'un axe transversal à la manière d'une pièce oscillante, caractérisé en ce que
    – une pièce de cadre (110) en forme de chevalet, qui peut être accouplée à l'embiellage (111) de levage ou à trois points est également montée fixement sur le cadre d'un chassis (101) séparé qui comprend des roues porteuses,
    – un cadre support (105) est monté sur le côté arrière, opposé à l'embiellage (111) de levage ou à trois points, de la partie de cadre (110) en forme de chevalet de l'appareil à rotor denté (102) ou similaire et du chassis (101) - en tant que partie de la partie de cadre en forme de chevalet (110) ou rigidement reliée à celui-ci - ledit cadre support pouvant être accouplé à des parties réceptrices (113) complémentaires d'un cadre porteur de la machine à semer (103), par le fait que le cadre support (105) est introduit depuis le dessous dans les parties réceptrices (113), ou que le cadre support de la machine à semer (103) est abaissé depuis le haut sur le cadre support (105) et est arrêté par rapport au cadre support (105) au moyen d'un verrouillage sans jeu dans toutes les directions,
    – des points d'attache spéciaux (107, 109), identiques à ceux du cadre de l'appareil à rotor denté (102) ou similaire, sont agencés sur le cadre porteur de la machine à semer (103) pour le cadre séparé de l'appareil à rouleau d'émottage (104),
    – les tubes (10) d'alimentation en semences peuvent être montés les uns derrière les autres suivant au moins deux rangées, les tubes d'alimentation (10) qui se suivent en direction transversale étant associés alternativement à l'une et à l'autre rangées,
    – un rideau (16) en forme de jupe peut être monté transversalement en arrière des tubes d'alimentation (10) en semences - en avant de l'appareil à rouleau d'émottage (104) éventuellement accouplé - ledit rideau ramenant l'écoulement de terre vers le sol, et
    – les outils de labourage (19) ou similaire peuvent être également montés sur le châssis (101).

2. Système d'appareils selon la revendication 1, caractérisé en ce que l'appareil à rouleau d'émottage (104) peut être monté sur un cadre intermédiaire (7) qui prolonge vers l'arrière à la manière d'une plate-forme le cadre de l'appareil à rotor denté (102) ou similaire, sur lequel est montée ou peut être montée une machine à semer (103).

3. Système d'appareils selon l'une ou l'autre des revendications 1 et 2, caractérisé en ce que l'appareil à rouleau d'émottage (104) peut également être accouplé sur le cadre du châssis (101), au moins en échange de l'essieu des roues porteuses.

4. Système d'appareils selon l'une quelconque des revendications 1 à 3, caractérisé les roues du châssis (101) sont portées sur un essieu (241, 242, 243) qui peut être monté basculant sur le cadre du châssis (101) à la manière d'une bielle longitudinale oscillant autour d'un axe transversal (245) et est supporté de manière à pouvoir être réglé en hauteur au moyen d'une pièce de support, p.ex. un ensemble à broche (244), cette dernière pouvant être introduite entre l'essieu et le cadre du châssis (101) à distance de l'axe transversal (245).

5. Système d'appareils selon la revendication 4, caractérisé en ce que le cadre du dispositif à rouleau d'émottage (104), réalisé à la manière d'une bielle oscillante longitudinale, peut être monté sur le cadre du châssis (101) sur les pièces de raccordement prévues pour l'essieu (241, 242, 243) de manière à pouvoir pivoter autour du même axe transversal (245) et peut être supporté au moyen de la même pièce de support, ou une pièce de support similaire (broche 244).

6. Système d'appareils selon l'une quelconque des revendications 1 à 5, caractérisé en ce qu'une poulie à gorge (118) ou similaire, qui peut être entraînée au moyen d'un arbre à broche (111), est montée sur le châssis (101) pour l'entraînement d'une machine à semer (103) ou similaire qui peut être montée sur le châssis (101).

7. Système d'appareils pour le travail du sol en agriculture selon l'une des revendications 1 à 6, caractérisé en ce que le cadre d'un appareil à rouleau d'émottage (104) est monté sur une poutre transversale (91) de manière à pouvoir pivoter autour d'un axe transversal, la poutre transversale étant à son tour montée sur un cadre intermédiaire (7) ou un cadre d'un appareil monté en avant (appareil à rotor denté 102, machine à semer 103) de manière à pouvoir pivoter autour d'un axe transversal, en ce que la poutre transversale (91) peut être déplacée au moyen d'une unité d'entraînement, ou d'une unité à piston-et-cylindre (92), entre une position finale pour un rouleau (17) qui est basculé vers le bas dans la position de travail, et une position finale pour un rouleau (17) qui est basculé vers le haut dans une position de transport, et en ce que le cadre de l'appareil à rouleau d'émottage (104) peut être réglé par rapport à la poutre transversale (91) au moyen d'un organe de positionnement (30) séparé.

8. Système d'appareils selon la revendication 7, caractérisé en ce que l'organe de positionnement séparé (30) permet de libérer un jeu et/ou est réalisé sous la forme d'un autre ensemble à piston-et-cylindre, qui permet de faire basculer le cadre de l'appareil à rouleau d'émottage (104) par rapport à la poutre transversale (91) entre deux positions finales.

9. Système d'appareils pour le travail du sol en agriculture, comprenant un rotor denté (14) selon l'une des revendications 1 à 8, caractérisé en ce que les dents de rotor (60) possèdent des bras de maintien (62) agencés sur l'arbre ou l'axe (61) de rotor ainsi que des pièces d'extrémité en forme de dents (63) qui sont tenues sur lesdits bras de maintien (62) de manière interchangeable, lesdites pièces d'extrémité en forme de dents (63) formant avec les bras de maintien (62) un angle obtus ouvert dans la direction de rotation, de sorte que les axes longitudinaux des pièces d'extrémité en forme de dents (63) s'étendent tangentiellement par rapport à l'axe du rotor et à distance de celui-ci, en ce que chaque pièce d'extrémité en forme de dent (63) est introduite par une partie d'introduction (65) en forme de tenon dans un perçage (64) de réception correspondant du bras de maintien (62) avec serrage dans la direction longitudinale, en ce que la pièce d'extrémité en forme de dent (63) est supportée au moyen d'un bourrelet (69) formé sur le bras de maintien (62) contre une région de la pièce d'extrémité en forme de dent (63) qui fait suite à la partie en forme de tenon (65) sur le côté dirigé à l'opposé de la direction de rotation, et en ce que les surfaces en contact mutuel du bourrelet (69) et de la pièce intermédiaire sont réalisées sous la forme de surfaces obliques ou en coin (67, 68), qui se coincent progressivement lors du serrage de la pièce d'extrémité en forme de dent (63).

10. Système d'appareils selon la revendication 9, caractérisé en ce qu'il est prévu des surfaces obliques (67, 68) agencées de manière prismatique.

11. Système d'appareils pour le travail du sol en agriculture, comprenant un rotor denté selon l'une des revendications 1 à 10, caractérisé en ce qu'une lame de soc d'enfouissage (71) est disposée à l'extrémité libre de chaque pièce d'extrémité (63) des dents, de telle manière que la terre engagée soit soulevée en direction de l'axe (61) du rotor (action de coupe), en ce que l'arête antérieure de la lame de soc (71) se projette en direction de rotation au-delà de la face avant, en direction de rotation, de la pièce d'extrémité (63) en forme de dent, ou au-delà d'un plan qui est parallèle à l'axe du rotor et qui contient ladite face avant, et en ce que la bordure de la lame de soc (71) dirigée vers l'arrière est située en direction de rotation devant ou dans un plan qui s'étend parallèlement à l'axe du rotor et est tangent au côté de la pièce d'extrémité (63) opposé à la direction de rotation.

12. Système d'appareils pour le travail du sol en agriculture, comprenant un rotor denté selon l'une des revendications 1 à 11, caractérisé en ce que le rotor denté (14) comprend plusieurs tronçons juxtaposés dans la direction axiale avec des paliers intermédiaires (24) agencés entre eux, en ce qu'il est prévu deux disques circulaires (26) mutuellement attachés, qui sont agencés entre des brides d'extrémité (25) des tronçons et qui peuvent être bridés contre ces brides d'extrémité, les disques circulaires délimitant entre eux une gorge circonférentielle dans laquelle est logé un palier radial (27) dont la cage extérieure peut être fixée sur le cadre de l'appareil à l'intérieur d'une pièce de maintien (28) séparable.

13. Système d'appareils selon l'une des revendications 1 à 12, caractérisé en ce qu'un volet (15) réglable en pivotement autour d'un axe transversal est agencé derrière le rotor denté (14) et à la suite d'un habillage supérieur de rotor, ce volet limitant vers le haut l'espace libre pour la terre projetée vers l'arrière par le rotor (14).

14. Système d'appareils selon la revendication 13, caractérisé en ce qu'une jupe flexible (80) est montée sur la bordure libre du volet (15) dans le prolongement de ce dernier, les dimensions de ladite jupe étant de préférence du même ordre de grandeur que celles du volet (15).

15. Système d'appareils pour le travail du sol en agriculture, comprenant des outils d'ameublissement ou de labourage selon l'une des revendications 1 à 14, caractérisé en ce que les outils d'ameublissement (19), agencés de préférence en avant d'un rotor denté (14) ou similaire, comprennent chacun une projection (21), triangulaire en vue latérale, sur la face avant de l'extrémité inférieure d'une tige de maintien (20), la projection présentant une pointe ou un sommet dirigé vers l'avant, l'outil d'ameublissement (19) étant monté de manière interchangeable sur ladite projection à la manière d'une chaussure, l'outil d'ameublissement (19) comprenant une partie en forme de burin (22) agencée le long de l'arête inférieure de la projection triangulaire (21) ainsi qu'une partie en forme de bande (23), qui est agencée en avant de l'arête antérieure de la projection (21) et est appliquée sur l'arête antérieure, et qui présente un profil en forme de coin dirigé vers l'avant, en ce que des plaques triangulaires (29) sont reliées à leurs arêtes inférieures et antérieures aux parties en forme de burin et en forme de bande (22, 23) de part et d'autre de la projection (21), en ce qu'il est prévu un dispositif à excentrique (85) servant au maintien des outils d'ameublissement (19), ce dispositif pouvant être engagé dans des perçages transversaux qui se chevauchent dans les plaques triangulaires (29) et dans la tige de maintien (20) ou une partie qui lui est reliée.

16. Système d'appareils selon la revendication 15, caractérisé en ce que les tiges de maintien (20) sont recourbées en direction du rotor denté (14) qui fonctionne en arrière de celles-ci, de telle manière que l'outil d'ameublissement (19) fonctionne directement en avant du rotor denté (14) ou similaire.

17. Système d'appareils selon l'une des revendications 1 à 16, caractérisé en ce que les outils de labourage ou d'ameublissement (19) sont montés par leurs tiges de maintien (20) avec possibilité de réglage en hauteur dans des fixations qui entourent les tiges (20) de façon annulaire, lesdites fixations pouvant être ouvertes latéralement de telle sorte que les tiges (20) peuvent être extraites hors des fixations perpendiculairement à leurs axes.

18. Système d'appareils selon l'une des revendications 1 à 17, caractérisé en ce que les tubes d'alimentation en semences (10) sont réalisés de manière télescopique, et dans chaque cas une pièce d'extrémité inférieure (10″) peut être fixée dans des positions de coulissement différentes sur ou dans une pièce (12′) supérieure du tube d'alimentation en semences (10) respectif.

19. Système d'appareils selon l'une des revendications 1 à 18, caractérisé en ce que les tubes d'alimentation en semences (10), qui peuvent de préférence être basculés dans la direction longitudinale de l'appareil, sont montés sur une poutre transversale (231) au moyen de fixations de type rapide (232, 234) qui sont réglables en direction transversale et qui entourent la poutre transversale à la manière d'un U au moyen d'un étrier (232), en ce que des pièces de serrage (234) sont agencées sur le côté de la poutre transversale dirigé à l'opposé de la partie médiane de l'étrier (233) entre les bras de l'étrier (233), lesdites pièces de serrage étant en contact mutuel par des surfaces obliques (234′) de telle manière que dans chaque cas une pièce de serrage est repoussée contre la poutre (231) lors du serrage des bras du U l'un contre l'autre.

20. Système d'appareils selon l'une des revendications 1 à 19, caractérisé en ce que les tubes d'alimentation en semences (10) sont supportés les uns derrière les autres conjointement sur un cadre ou, de préférence, sur une poutre transversale (231) qui est réglable verticalement et/ou en direction longitudinale de l'appareil et/ou par rotation autour de son axe.

21. Système d'appareils selon l'une des revendications 1 à 20, caractérisé en ce qu'un dispositif d'entraînement de l'appareil à rotor denté (102) ou similaire, qui peut être raccordé avec l'embout d'arbre (111) comprend une prise d'entraînement additionnelle pour une poulie à gorge (118) ou similaire destinée à l'entraînement d'une machine à semer (103) qui peut être montée sur l'appareil à rotor denté (102) ou similaire.

Fig.1    Fig.2    Fig.3    Fig.4

Fig.5

EP 0 359 741 B1

# Fig.6

EP 0 359 741 B1

Fig.7

Fig. 8

Fig. 9

Fig.10

Fig. 11

Fig.12

Fig.13

Fig.15

71

63

70

71'

71''

70

63

XV

XV

Fig.14

71

Fig.16

Fig.17

Fig.18

Fig.19

EP 0 359 741 B1

Fig. 20

Fig.21

Fig.22

Fig.23

Fig. 24